(19) Europäisches Patentamt
European Patent Office
Office européen des brevets

(11) Veröffentlichungsnummer: **0 169 167**
**B1**

(12) **EUROPÄISCHE PATENTSCHRIFT**

(45) Veröffentlichungstag der Patentschrift: **02.05.90**

(21) Anmeldenummer: **85810269.2**

(22) Anmeldetag: **10.06.85**

(51) Int. Cl.$^5$: **C 09 B 45/00,** C 09 B 56/02, C 08 K 5/23

(54) **Verfahren zum Färben von hochmolekularem organischem Material und neue Metallkomplexe.**

(30) Priorität: **15.06.84 CH 2914/84**

(43) Veröffentlichungstag der Anmeldung: **22.01.86 Patentblatt 86/04**

(45) Bekanntmachung des Hinweises auf die Patenterteilung: **02.05.90 Patentblatt 90/18**

(84) Benannte Vertragsstaaten: **CH DE FR GB IT LI**

(56) Entgegenhaltungen:
**BE-A- 551 121**
**DE-C- 944 881**

(73) Patentinhaber: **CIBA-GEIGY AG**
**Klybeckstrasse 141**
**CH-4002 Basel (CH)**

(72) Erfinder: **Cseh, Georg, Dr.**
**Praz d'Avant 49**
**CH-1726 Posat (CH)**
Erfinder: **Lienhard, Paul, Dr.**
**Kirschgartenstrasse 14**
**CH-4402 Frenkendorf (CH)**

**EP 0 169 167 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft das Färben von hochmolekularem organischem Material in der Masse sowie hierfür eingesetzte neue Metallkomplexe aus Oximen von o-Hydroxybenzaldehyden oder -Ketonen.

Es ist bekannt, Azofarbstoffe enthaltend eine Aldoximgruppe als Dispersionsfarbstoffe zum Färben von synthetischen Fasern zu verwenden. So werden beispielsweise in der Japanischen Auslegeschrift Nr. 67—3391 Nickelkomplexe aus Salicylaldoxim zum Färben von Polypropylen beschrieben. In der DE—C—944881 werden metallkomplexbildende Azofarbstoffe beschrieben, welche im Molekül eine Oxygruppe und eine Ketoximgruppe in o-Stellung zueinander enthalten.

Gegenstand der vorliegenden Erfindung ist ein Verfahren zum Färben von hochmolekularem organischem Material in der Masse und ist dadurch gekennzeichnet, dass Verbindungen der Formeln I und/oder Ia

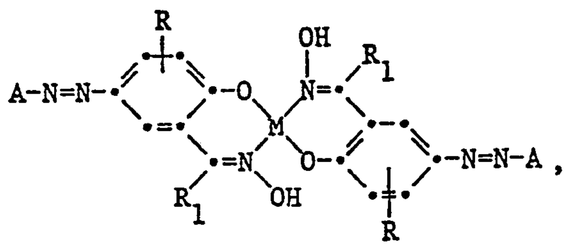

(I)

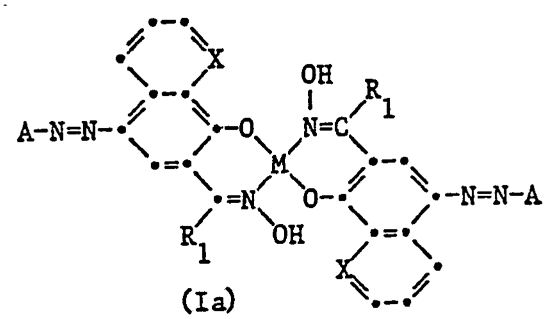

(Ia)

verwendet werden, worin

A einen unsubstituierten oder durch Halogen, Phenyl, Phenylazo, Carboxy, $—CF_3$, $—NO_2$, —CN, $C_1—C_4$ Alkyl, $C_1—C_4$ Alkoxy, $—CONH_2$, $—SO_2NH_2$, $—CONHR_2$, $—COOR_3$, $—NHCOR_4$ oder $—SO_2NHR_2$ substituierten Phenylrest bedeutet, wobei $R_2$ $C_1—C_4$ Alkyl oder unsubstituiertes oder durch Halogen, $—CF_3$, $C_1—C_4$ Alkyl, $C_1—C_4$ Alkoxy, $—NO_2$, —CN, $—CONH_2$, $—SO_2NH_2$, $—CONHC_1—C_4$ Alkyl, $—CONHC_6H_5$, $C_2—C_5$ Alkoxycarbonyl, $C_2—C_5$ N-Alkylcarbamoyl, $—NHCOC_6H_5$, $—SO_2NHC_1—C_4$ Alkyl oder $—SO_2NHC_6H_5$ substituiertes Phenyl, $R_3$ $C_1—C_4$ Alkyl, unsubstituiertes oder durch Halogen oder $C_1—C_4$ Alkyl substituiertes Benzyl oder unsubstituiertes oder durch Halogen, $C_1—C_4$ Alkyl, $C_1—C_4$ Alkoxy, $C_2—C_5$ Alkoxycarbonyl oder $C_2—C_5$ N-Alkylcarbamoyl substituiertes Phenyl und $R_4$ $C_1—C_4$ Alkyl oder unsubstituiertes oder durch Halogen, $C_1—C_4$ Alkyl, $C_1—C_4$ Alkoxy, $—NO_2$ oder $C_2—C_5$ N-Alkylcarbamoyl substituiertes Phenyl darstellen, ferner A einen unsubstituierten oder durch Halogen oder $—CH_3$ substituierten Naphthylrest, einen unsubstituierten oder durch Halogen, $—NO_2$, $—CH_3$, $—OCH_3$, $—NHCOCH_3$ oder $—NHCOC_6H_5$ substituierten Anthrachinonyl-rest, oder einen unsubstituierten oder durch —Cl, $—CH_3$ oder $—OCH_3$ substituierten heterocyclischen aromatischen Rest bedeutet,

R —H, —Cl, $—CH_3$ oder $—OCH_3$, $R_1$ —H, $C_1—C_4$ Alkyl oder unsubstituiertes oder durch Halogen, $C_1—C_4$ Alkyl, $C_1—C_4$ Alkoxy, $—NO_2$, $—CONH_2$, $—CONHR_2$ oder $C_2—C_5$ N-Alkylcarbamoyl substituiertes Phenyl, X —CH= oder —N= und M ein zweiwertiges Uebergangsmetall darstellen, wobei $R_2$ die oben angegebene Bedeutung hat.

Ist Phenyl als A, $R_1$, $R_2$, $R_3$ und $R_4$ durch $C_1—C_4$ Alkyl- oder $C_1—C_4$ Alkoxy-gruppen substituiert, so handelt es sich dabei um eine bis drei Gruppen, beispielsweise um eine Methyl-, Aethyl-, n-Propyl-, Isopropyl-, n-Butyl-, Isobutyl- und tert.-Butylgruppe bzw. um eine Methoxy-, Aethoxy-, n-Propoxy-, Isopropoxy-, n-Butoxy-, Isobutoxy- und tert.-Butoxygruppen, insbesondere aber um eine Methyl- bzw. Methoxygruppe.

Sind A durch Halogen substituierte Phenyl-, Naphthyl- oder Anthrachinonylreste, $R_3$ durch Halogen substituiertes Benzyl oder $R_1$, $R_2$, $R_3$ und $R_4$ durch Halogen substituiertes Phenyl, so handelt es sich dabei um Fluor-, Chlor-, Brom- und Jodatome, insbesondere aber um Chloratome.

Stellen $R_2$, $R_3$ und $R_4$ $C_1—C_4$ Alkyl dar, so handelt es sich dabei um eine Methyl-, Aethyl-, n-Propyl-, Isopropyl-, n-Butyl-, Isobutyl- und tert.-Butylgruppe, für $R_2$ insbesondere um eine Methylgruppe, für $R_3$ und $R_4$ insbesonders um eine Methyl- und Aethylgruppe.

Bedeutet $R_1$ $C_1—C_4$ Alkyl, so handelt es sich dabei beispielsweise um eine Methyl-, Aethyl-, Isopropyl- und tert.-Butylgruppe, insbesondere aber um eine Methylgruppe.

Stellt $R_3$ durch $C_1—C_4$ Alkyl substituiertes Benzyl dar, so handelt es sich dabei beispielsweise um eine Methyl-, Aethyl-, Isopropyl- und Isobutylgruppe.

Bedeuten $R_2$ und $R_3$ durch $C_2—C_5$ Alkoxycarbonyl substituiertes Phenyl, so handelt es sich dabei beispielsweise um eine Methoxy-, Aethoxy-, Propoxy-, Isopropoxy-, Butoxy-, Isobutoxy- und tert.-Butoxycarbonylgruppe.

Ist Phenyl als $R_1$, $R_2$, $R_3$ und $R_4$ durch $C_2—C_5$ N-Alkylcarbamoyl substituiert, so handelt es sich dabei beispeilsweise um eine Acetylamino-, Propionylamino-, Butyrylamino-, Isobutyrylamino-, Valerylamino- und Isovalerylaminogruppe, insbesondere aber um eine Acetylaminogruppe.

Ist Phenyl als $R_2$ durch $—CONHC_1—C_4$ Alkyl oder $—SO_2NHC_1—C_4$ Alkyl substituiert, so handelt es sich bei der Alkygruppe beispielsweise um eine Methyl-, Aethyl-, Propyl-, Isopropyl- und Butylgruppe.

Ist Phenyl als $R_2$ durch die Gruppen $-CONHC_6H_5$, $-NHCOC_6H_5$ oder $-SO_3NHC_6H_5$ substituiert, so können diese Gruppen noch weitere Substituenten wie Chloratome und/oder Methyl- und/oder Methoxygruppen aufweisen.

Stellt A einen heterocyclischen aromatischen Rest dar, so leitet sich dieser beispielsweise von folgenden heterocyclischen Aminen ab: 5-Amino-benzimidazolon, 5-Amino-1-methyl-benzimidazolon, 5-Amino-1-n-butyl-benzimidazolon, 5-Amino-1-phenyl-benzimidazolon, 5-Amino-1-p-chlorphenyl-benzimidazolon, 5-Amino-1-p-methylphenyl-benzimidazolon, 5-Amino-1-p-methoxyphenyl-benzimidazolon, 5-Amino-6-chlor-benzimidazolon, 5-Amino-6-brom-benzimidazolon, 5-Amino-6-methyl-benzimidazolon, 5-Amino-6-methoxy-benzimidazolon, 6-Amino-benzoxazolon, 5-Amino-benzoxazolon, 5-Amino-7-chlor-benzoxazolon, 6-Amino-5-chlor-benzoxazolon, 6-Amino-5-methyl-benzoxazolon, 6-Amino-5-chlor-benzthiazolon, 6-Amino-5-methyl-benzthiazolon, 6-Amino-chinazolon-4, 6-Amino-2-methyl-chinazolon-4, 6-Amino-2-methoxy-chinazolon-4, 6-Amino-7-chlor-2-methyl-chinazolon-4, 7-Amino-chinazolon-4, 2-(4'-Aminophenyl)-chinazolon-4, 2-(3'-Aminophenyl)-chinazolon-4, 2-(4'-Amino-3'-methoxyphenyl)-chinazolon-4, 2-(4'-Amino-3'-chlorphenyl)-chinazolon-4, 2-(3'-Amino-4'-methylphenyl)-chinazolon-4, 6-Amino-2,4-dihydroxychinazolin, 7-Amino-phenmorpholon-3, 6-Amino-phenmorpholon-3, 7-Amino-6-chlor-phenmorpholon-3, 7-Amino-6-methyl-phenmorpholon-3, 7-Amino-6-methoxy-phenmorpholon-3, 6-Amino-chinolon-2, 6-Amino-4-methyl-chinolon-2, 7-Amino-4-methyl-chinolon-2, 7-Amino-4,6-dimethyl-chinolon-2, 6-Amino-7-chlor-4-methyl-chinolon-2, 7-Amino-4-methyl-6-methoxy-chinolon-2, 6-Amino-1,3-dihydroxy-isochinolin, 6-Amino-2,4-dihydroxy-chinolin, 6-Amino-2,3-dihydroxychinoxalin und 4-Amino-phthalsäureimid.

M ist beispielsweise ein Ni-, Cu-, Co- oder Zn-Atom. Bevorzugt sind Ni- bzw. Cu-Verbindungen der Formeln I bzw. Ia. Man kann ferner Mischungen von Metallkomplexen verwenden, beispielsweise Mischungen von Ni- und Zn- oder von Co- und Zn-Komplexen.

Von besonderem Interesse ist die Verwendung der Verbindungen der Formel I, worin R —H, $R_1$ —H, $-CH_3$ oder Phenyl, M ein Nickel- oder Kupferatom und A einen Rest der Formel II

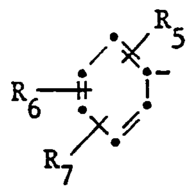

(II)

bedeuten, worin $R_5$ —H oder —Cl, $-CH_3$, $-OCH_3$, $-NO_2$, —CN, $-CF_3$, —COOH, $-CONH_2$, $-SO_2NH_2$, $-CONHR_2$, $-COOR_3$ oder $-NHCOR_4$ darstellt, $R_6$ —H oder —Cl, $-CH_3$, $-OCH_3$, $-CONH_2$ oder $-COOR_3$ und $R_7$ —H oder —Cl bedeuten, wobei $R_2$ $C_1$—$C_4$ Alkyl oder unsubstituiertes oder durch —Cl, $-CF_3$, $-CH_3$, $-OCH_3$, $-NO_2$, —CN, $-CONH_2$, $-SO_2NH_2$, $-CONHC_1$—$C_4$ Alkyl, $-CONHC_6H_5$, $C_2$—$C_5$ Alkoxycarbonyl, $C_2$—$C_5$ N-Alkylcarbamoyl, $-NHCOC_6H_5$, $-SO_2NHC_6H_5$ oder $-SO_2NHC_1$—$C_4$ Alkyl substituiertes Phenyl, $R_3$ $C_1$—$C_4$ Alkyl, Benzyl, unsubstituiertes oder durch —Cl, $-CH_3$, $-OCH_3$, $C_2$—$C_5$ Alkoxycarbonyl oder $C_3$—$C_5$ N-Alkylcarbamoyl substituiertes Phenyl und $R_4$ $-CH_3$ oder unsubstituiertes oder durch —Cl, $-CH_3$, $-OCH_3$, $-NO_2$ oder $C_2$—$C_5$ N-Alkylcarbamoyl substituiertes Phenyl darstellen.

Von ganz besonderem Interesse ist die Verwendung der Verbindungen der Formel I, worin R —H und $R_1$ —H oder $-CH_3$, M ein Nickelatom und A einen Rest der Formel II bedeuten, worin $R_5$ —H, Cl, $-CH_3$, $-OCH_3$, $-NO_2$, $-CF_3$, —COOH, $-COOCH_3$, $-CONH_2$, $-CONHC_6H_5$, $-NCOCH_3$ oder $-NHCOC_6H_5$, $R_6$ —H, —Cl oder $-CH_3$ und $R_7$ —H oder —Cl bedeuten.

Einen weiteren Erfindungsgegenstand bilden die Verbindungen der Formeln I und Ia.

In der Formel I bedeuten, wenn R —Cl, $-CH_3$ oder $-OCH_3$ und $R_1$ —H, $C_1$—$C_4$ Alkyl oder unsubstituiertes oder durch Halogen, $C_1$—$C_4$ Alkyl, $C_1$—$C_4$ Alkoxy, $-NO_2$ $-CONH_2$, $-CONHR_2$ oder $C_2$—$C_5$ N-Alkylcarbamoyl substituiertes Phenyl darstellen.

A einen unsubstituierten oder durch Halogen, Phenyl, Phenylazo, $-CF_3$, $-NO_2$, —CN, —COOH, $C_1$—$C_4$ Alkyl, $C_1$—$C_4$ Alkoxy, $-CONH_2$, $-SO_2NH_2$, $-CONHR_2$, $-COOR_3$, $-NHCOR_4$ oder $-SO_2NHR_2$ substituierten Phenylrest, wobei $R_2$ $C_1$—$C_4$ Alkyl oder unsubstituiertes oder durch Halogen, $-CF_3$, $C_1$—$C_4$ Alkyl, $C_1$—$C_4$ Alkoxy, $-NO_2$, —CN, $-CONH_2$, $SO_2NH_2$, $-CONHC_1$—$C_4$ Alkyl, $-CONHC_6H_5$, $C_2$—$C_5$ Alkoxycarbonyl, $C_2$—$C_5$ N-Alkylcarbamoyl, $-NHCOC_6H_5$, $-SO_2NHC_1$—$C_4$ Alkyl oder $-SO_2NHC_6H_5$ substituiertes Phenyl, $R_3$ $C_1$—$C_4$ Alkyl, un substituiertes oder durch Halogen oder $C_1$—$C_4$ Alkyl substituiertes Benzyl oder unsubstituiertes oder durch Halogen, $C_1$—$C_4$ Alkyl, $C_1$—$C_4$ Alkoxy, $C_2$—$C_5$ Alkoxycarbonyl oder $C_2$—$C_5$ N-Alkylcarbamoyl substituiertes Phenyl und $R_4$ $C_1$—$C_4$ Alkyl oder unsubstituiertes oder durch Halogen, $C_1$—$C_4$ Alkyl, $C_1$—$C_4$ Alkoxy, $-NO_2$ oder $C_2$—$C_5$ N-Alkylcarbamoyl substituiertes Phenyl darstellen, ferner A einen unsubstituierten oder durch Halogen oder $-CH_3$ substituierten Naphthylrest, einen unsubstituierten oder durch Halogen, $-NO_2$, $-CH_3$, $-OCH_3$, $-NHCOCH_3$ oder $-NHCOC_6H_5$ substituierten Anthrachinonylrest, oder einen unsubstituierten oder durch —Cl, $-CH_3$ oder $-OCH_3$ substituierten heterocyclischen aromatischen Rest, und M ein zweiwertiges Uebergangsmetall, ferner in der Formel I, wenn R und $R_1$ beide ein Wasserstoffatom darstellen M die oben angegebene Bedeutung hat und A für die Gruppe der Formel III

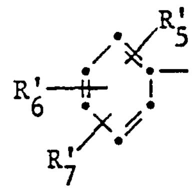

(III)

steht, worin

$R_5'$ —CN, —$CONHR_2$, —$COOR_3$ oder —$NHCOR_4$,

$R_6'$ —H, Halogen, $C_1$—$C_4$ Alkyl, $C_1$—$C_4$ Alkoxy, —$CONH_2$, —$CONHR_2$, —$COOR_3$ oder —$NHCOR_4$ bedeuten, wobei $R_2$, $R_3$ und $R_4$ die oben angegebene Bedeutung haben und $R_7'$ —H oder Halogen bedeutet, oder ferner A einen unsubstituierten oder durch Halogen oder —$CH_3$ substituierten Naphthylrest, einen unsubstituierten oder durch Halogen, —$NO_2$ —$CH_3$, —$OCH_3$, —$NHCOCH_3$ oder —$NHCOC_6H_5$ substituierten Anthrachinonylrest, oder einen unsubstituierten oder durch —Cl, —$CH_3$ oder —$OCH_3$ substituierten heterocyclischen aromatischen Rest bedeutet.

In der Formel Ia bedeuten

A einen unsubstituierten oder durch Halogen, Phenyl, Phenylazo, —$CF_3$, —COOH, —$NO_2$, —CN, $C_1$—$C_4$ Alkyl, $C_1$—$C_4$ Alkoxy, —$CONH_2$, —$SO_2NH_2$, —$CONHR_2$, —$COOR_3$, —$NHCOR_4$ oder —$SO_2NHR_2$ substituierten Phenylrest, wobei $R_2$ $C_1$—$C_4$ Alkyl oder unsubstituiertes oder durch Halogen, —$CF_3$, $C_1$—$C_4$ Alkyl, $C_1$—$C_4$ Alkoxy, —$NO_2$, —CN, —$CONH_2$, —$SO_2NH_2$, —$CONHC_1$—$C_4$ Alkyl, —$CONHC_6H_5$, $C_2$—$C_5$ Alkoxycarbonyl, $C_2$—$C_5$ N-Alkylcarbamoyl, —$NHCOC_6H_5$, —$SO_2NHC_1$—$C_4$ Alkyl oder —$SO_2NHC_6H_5$ substituiertes Phenyl, $R_3$ $C_1$—$C_4$ Alkyl, unsubstituiertes oder durch Halogen oder $C_1$—$C_4$ Alkyl substituiertes Benzyl oder unsubstituiertes oder durch Halogen, $C_1$—$C_4$ Alkyl, $C_1$—$C_4$ Alkoxy, $C_2$—$C_5$ Alkoxycarbonyl oder $C_2$—$C_5$ N-Alkylcarbamoyl substituiertes Phenyl und $R_4$ $C_1$—$C_4$ Alkyl oder unsubstituiertes oder durch Halogen, $C_1$—$C_4$ Alkyl, $C_1$—$C_4$ Alkoxy, —$NO_2$ oder $C_2$—$C_5$ N-Alkylcarbamoyl substituiertes Phenyl darstellen, ferner A einen unsubstituierten oder durch Halogen oder —$CH_3$ substituierten Naphthylrest, einen unsubstituierten oder durch Halogen, —$NO_2$, —$CH_3$, —$OCH_3$, —$NHCOOCH_3$ oder —$NHCOC_6H_5$ substituierten Anthrachinonylrest, oder einen unsubstituierten oder durch —Cl, —$CH_3$ oder —$OCH_3$ substituierten heterocyclischen atomatischen Rest, $R_1$ —H, $C_1$—$C_4$ Alkyl oder unsubstituiertes oder durch Halogen, $C_1$—$C_4$ Alkyl, $C_1$—$C_4$ Alkoxy, —$NO_2$, —$CONH_2$, —$CONHR_2$ oder $C_2$—$C_5$ N-Alkylcarbamoyl substituiertes Phenyl, X —CH= oder —N=, wobei, wenn X —CH= bedeutet, $R_1$ kein Wasserstoffatom sein darf, und M ein zweiwertiges Uebergangsmetall.

Bevorzugt sind jene Verbindungen der Formel I, worin, wenn $R_1$ —$CH_3$ oder Phenyl darstellt, R —H, und M ein Kupfer- oder Nickelatom bedeuten, und A für den Rest der Formel II

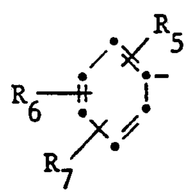

(II)

steht, wobei $R_5$ —H oder —Cl, —$CH_3$, —$OCH_3$, —$NO_2$, —CN, —$CF_3$, —COOH, —$CONH_2$, —$SO_2NH_2$, —$CONHR_2$, —$COOR_3$ oder —$NHCOR_4$, $R_6$ —H oder —Cl, —$CH_3$, —$OCH_3$, —$CONH_2$ oder —$COOR_3$, und $R_7$ —H oder —Cl darstellen, wobei $R_2$ $C_1$—$C_4$ Alkyl oder unsubstituiertes oder durch —Cl, —$CF_3$, —$CH_3$, —$OCH_3$, —$NO_2$, —CN, —$CONH_2$, —$SO_2NH_2$, —$CONHC_1$—$C_4$ Alkyl, —$CONHC_6H_5$, $C_2$—$C_5$ Alkoxycarbonyl, $C_2$—$C_5$ N-Alkylcarbamoyl, —$NHCOC_6H_5$, —$SO_2NHC_6H_5$ oder —$SO_2NHC_1$—$C_4$ Alkyl substituiertes Phenyl, $R_3$ $C_1$—$C_4$ Alkyl, Benzyl, unsubstituiertes oder durch —Cl, —$CH_3$, —$OCH_3$, $C_2$—$C_5$ Alkoxycarbonyl oder $C_2$—$C_5$ N-Alkylcarbamoyl substituiertes Phenyl und $R_4$ —$CH_3$ oder unsubstituiertes oder durch —Cl, —$CH_3$, —$OCH_3$, —$NO_2$ oder $C_2$—$C_5$ N-Alkylcarbamoyl substituiertes Phenyl darstellen, und wenn $R_1$ ein Wasserstoffatom ist, R und M die oben angegebene Bedeutung haben, und A für den Rest der Formel III

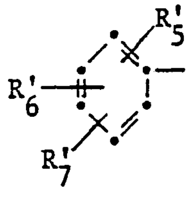

(III)

steht, worin

$R_5'$ —CN, —$CONHR_2$, —$COOR_3$ oder —$NHCOR_4$,

$R_6'$ —H, —Cl, $C_1$—$C_4$ Alkyl, $C_1$—$C_4$ Alkoxy, —$CONH_2$, —$CONHR_2$, —$COOR_3$ oder —$NHCOR_4$ bedeuten, wobei $R_2$, $R_3$ und $R_4$ die oben angegebene Bedeutung haben, und $R_7'$ —H oder —Cl bedeutet.

Von besonderem Interesse sind jene Verbindungen der Formel I, worin R und $R_1$ ein Wasserstoffatom, und M ein Nickelatom bedeuten, und A für die Gruppe der Formel III steht, worin $R_5'$ $-CONH_2$, $-CONHCH_3$, $-CONHC_6H_5$ oder $-COOCH_3$, $R_6'$ $-H$, $-Cl$ oder $-CH_3$ und $R_7'$ $-H$ oder $-Cl$ bedeuten.

Die Verbindungen der Formeln I und Ia können nach an sich bekannten Verfahren hergestellt werden, so beispielsweise durch Diazotierung eines Amins der Formel $A-NH_2$ und anschliessende Kupplung mit einem Hydroxybenzaldehyd bzw. Hydroxyketon der Formeln IV und V

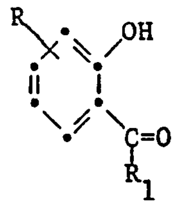
(IV),
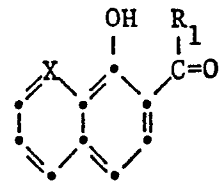
(V),

zur Azoverbindung der Formeln VI bzw. VII

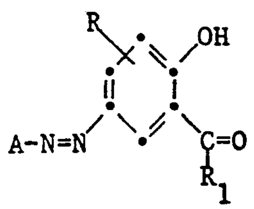
(VI),
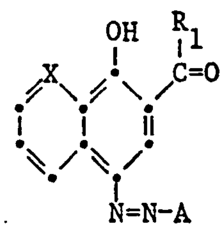
(VII).

Letztere werden mit Hydroxylamin zum Aldoxim- bzw. Ketoximderivat der Formeln VIII bzw. IX

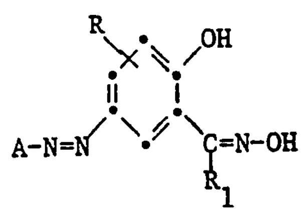
(VIII),
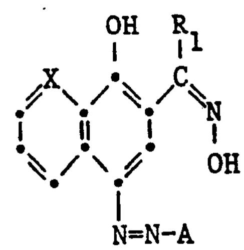
(IX)

umgesetzt und anschliessend mittels eines geeigneten Uebergangsmetallsalzes zu Metallkomplexen der Formeln I bzw. Ia umgesetzt.

Die Verbindungen der Formeln VIII und IX erhält man auch durch Diazotierung eines Amins der Formel $A-NH_2$ und Kupplung der erhaltenen Diazoverbindung mit einem Aldoxim bzw. Ketoxim der Formeln X bzw. XI

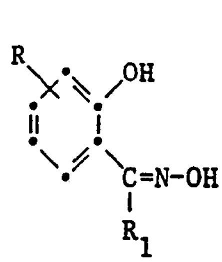
(X),
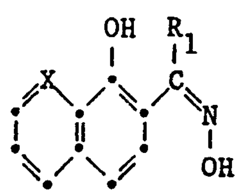
(XI).

In den Formeln IV bis XI haben A, X, R und $R_1$ die oben angegebene Bedeutung.

Die benötigten Zwischenprodukte der Formel $A-NH_2$ und der Formeln IV und V stellen bekannte Verbingungen dar. Als Beispeile für Verbindungen der Formel $A-NH_2$ seien genannt:

Anilin, 2-Chlor-anilin, 3-Chlor-anilin, 4-Chlor-anilin, 2-Trifluormethyl-anilin, 3-Trifluormethyl-anilin, 2,3-Dichlor-anilin, 2,4-Dichlor-anilin, 2,5-Dichlor-anilin, 3,4-Dichlor-anilin, 3,5-Dichlor-anilin, 2-Chlor-5-trifluormethyl-anilin, 4-Chlor-5-trifluormethyl-anilin, 2,3,4-Trichlor-anilin, 2,4,5-Trichlor-anilin, 2-Methyl-anilin, 3-Methyl-anilin, 4-Methyl-anilin, 2-Methyl-3-chlor-anilin, 2-Methyl-5-chlor-anilin, 4-Methyl-2-chlor-anilin, 4-Methyl-3-chlor-anilin, 5-Methyl-2-chlor-anilin, 2-Methoxy-anilin, 3-Methoxy-anilin, 4-Methoxy-anilin, 2-Methoxy-3-chlor-anilin, 2-Methoxy-4-chlor-anilin, 2-Methoxy-5-chlor-anilin, 2-Cyano-anilin, 2-Nitro-anilin, 3-Nitro-anilin, 4-Nitro-anilin, 2-Nitro-4-chlor-anilin, 2-Nitro-5-chlor-anilin, 2-Nitro-4-trifluormethyl-anilin, 3-Nitro-4-chlor-anilin, 3-Nitro-6-chlor-anilin, 4-Nitro-2-chlor-anilin, 4-Nitro-3-chlor-anilin, 4-Nitro-2-brom-anilin, 2-Nitro-4-methyl-anilin, 2-Nitro-4-methoxy-anilin, 3-Nitro-6-methyl-anilin, 2-Nitro-6-methoxy-anilin, 3-Nitro-4-methyl-anilin, 3-Nitro-4-methoxy-anilin, 4-Nitro-2-methyl-anilin, 4-Nitro-2-methoxy-anilin, 4-Chlor-2,5-dimethoxy-anilin, 4-Nitro-2,5-dichlor-anilin, 2-Methyl-4,5-dichlor-anilin, 2-Methoxy-4-nitro-5-chlor-anilin, 2,5-Dimethoxy-4-chlor-anilin, 3-Acetylamino-anilin, 4-Acetylamino-anilin, 2-Chlor-5-acetylamino-anilin, 2-Methoxy-5-acetylamino-anilin, 2-Methyl-5-acetylamino-anilin, 3-Amino-4-chlor-benzoesäureäthylester, 3-Amino-4-methyl-benzoesäureäthylester, 3-Amino-benzoesäureämid, 4-Amino-benzoesäureämid, 3-Amino-4-chlor-benzoesäureamid, 3-Amino-4-methyl-benzoesäureamid, 3-Amino-4-methoxy-benzoesäureamid, 3-Amino-4-chlor-benzoesäureanilid, 3-Amino-4-methyl-benzoesäureanilid, 3-Amino-4-methoxy-benzoesäureanilid, 3-Amino-benzolsulfonsäureamid, 4-Amino-benzolsulfonsäureamid, 5-Amino-benzimidazolon, 5-Amino-6-chlor-benzimidazolon, 7-Amino-4-methyl-chinolon-2, 7-Amino-6-chlor-4-methyl-chinolon-2, 7-Amino-4,6-dimethyl-chinolon-2, 7-Amino-chinazolon-4, 6-Amino-phenmorpholon-3, 6-Amino-benzoxazin-2,4-dion, 1-Amino-anthrachinon, 2-Amino-anthrachinon, 1-Amino-naphthalin, 2-Amino-naphthalin, 4-Amino-azobenzol, Amino-terephthalsäredimethylester, 5-Amino-isophthalsäuredimethylester, 1-Amino-2-methyl-anthrachinon, 1-Amino-4-acetylamino-anthrachinon und 1-Amino-4-benzoyl-amino-anthrachinon.

Beispiele für Verbindung der Formeln IV und V seien genannt: 2-Hydroxy-benzaldehyd, 2-Hydroxy-3-chlor-benzaldehyd, 2-Hydroxy-4-chlor-benzaldehyd, 2-Hydroxy-3-methyl-benzaldehyd, 2-Hydroxy-4-methyl-benzaldehyd, 2-Hydroxy-6-methyl-benzaldehyd, 2-Hydroxy-3-methoxy-benzaldehyd, 2-Hydroxy-4-methoxy-benzaldehyd, 2-Hydroxy-acetophenon, 2-Hydroxy-3-chlor-acetophenon, 2-Hydroxy-4-chlor-acetophenon, 2-Hydroxy-3-methyl-acetophenon, 2-Hydroxy-4-methyl-acetophenon, 2-Hydroxy-3-methoxy-acetophenon, 2-Hydroxy-4-methoxy-acetophenon, 2-Hydroxy-benzophenon, 2-Hydroxy-3-chlor-benzophenon, 2-Hydroxy-4-chlor-benzophenon, 2-Hydroxy-3-methyl-benzophenon, 2-Hydroxy-4-methyl-benzophenon, 2-Hydroxy-3-methoxy-benzophenon, 2-Hydroxy-4-methoxy-benzophenon, 2-Hydroxy-3,4'-dichlor-benzophenon, 2-Hydroxy-4,4'-dichlor-benzophenon, 2-Hydroxy-3,6'-dimethyl-bezaldehyd, 1-Hydroxy-2-naphthaldehyd, 1-Hydroxy-2-acetylnaphthlin, 1-Hydroxy-2-benzoyl-naphthalin und 8-Hydroxy-7-formyl-chinolin.

Für die Metallisierung werden beispielsweise Nickel-, Kupfer-, Kobalt- oder Zinkacetat, -chlorid, -sulfat, -nitrat oder -phosphat verwendet. Es kann auch mit Koordinationsverbindungen der gennannten Uebergangs-metalle wie beispielsweise Nickel-acetylacetonat oder Kupfer-tetra-aminosulfat gearbeitet werden. Dabei werden zweckmässig organische Lösungsmittel verwendet.

Als Lösungsmittel seien beispielsweise gennant:

Methanol, Isopropanol, n-Butanol, Aethylenglykol, Aethylenglykol-monomethyläther, Aethylenglykolmonoäthyläther, Dimethylformamid, Nitrobenzol, Dichlorbenzol, Toluol und Eisessig. Gemische von organischen Lösungsmitteln, von organischen Lösungmitteln mit Wasser sowie Wasser allein können hierfür auch verwendet werden.

Die Reaktion geht bei erhöhter Temperatur vor sich, vorzugsweise zwischen 50°C und dem Siedepunkt des verwendeten Lösungmittels.

Die so erhaltenen Metallkomplexe der Formeln I und Ia lassen sich leicht durch Filtration isolieren. Allfällige Verunreinigungen können durch Auswaschen entfernt werden.

Je nach Art ihrer Substituenten und des zu färbenden Polymeren können die Verbindungen der Formeln I und Ia als polymerlösliche Farbstoffe oder insbesondere als Pigmente verwendet werden. Im letzteren Falle ist es vorteilhaft, die bei der Synthese anfallenden Produkte in eine fein-disperse Form überzuführen. Dies kann auf verschiedene Weise geschehen, so beispielsweise durch Mahlen oder Kneten, zwechmässig in Gegenwart von Mahlhilfsmitteln, wie anorganischen oder organischen Salzen mit oder ohne Zusatz organischer Lösungsmittel. Nach dem Mahlen werden die Hilfsmittel wie üblich entfernt, lösliche anorganische Salze z.B. mit Wasser und wasserunlösliche organische Lösungsmittel beispielsweise durch Wasserdampfdestillation.

Es kann sich als zweckmässig erweisen, die Metallkomplexe der Formeln I und Ia mit organischen Lösungsmitteln, vorzugsweise mit solchen, die über 100°C sieden, nachzubehandeln.

Als besonders geeignet hierfür erweisen sich durch Halogenatome, Alkyl- oder Nitrogruppen substituierte Benzole, wie Xylole, Chlorbenzol, o-Dichlorbenzol, Toluol oder Nitrobenzol, ferner Alkohole, wie Isopropanol oder Isobutanol, ferner Ketone, wie Cyclohexanon, Aether wie Aethylenglykolmonomethyl- oder -monoäthyläther, Amide wie Dimethylformamid oder N-Methylpyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen oder aliphatischen Aminen oder in flüssigem Ammoniak durchführen.

Durch die oben erwähnten Nachbehandlungen lassen sich die Metallkomplexe der Formeln I und Ia bezüglich ihrer Korngrösse und ihrer Pigment-eigenschaften wir Farbstärke, Migrations-, Licht- und Wetterbeständigkeit sowie Deckkraft steuren bzw. optimieren.

Je nach Verwendungszweck erweist es sich als vorteilhaft, die Pigmente als Toner oder in Form von Präparaten zu verwenden.

Das erfindungsgemäss zu färbende hochmolekulare organische Material kann natürlicher oder künstlicher Herkunft sein. Es kann sich z.B. um Naturharze oder trocknende Oele, Kautschuk oder Casein

oder um abgewandelte Naturstoffe, wie Chlorkautschuk, ölmodifizierte Alkydharze, Viscose, um Celluloseäther oder Ester, wie Celluloseacetat, Cellulosepropionat, Celluloseacetobutyrat oder Nitrocellulose handeln, insbesondere aber um vollysynthetische organische Polymere (Duroplaste und Thermoplaste), wie sie durch Polymerisation, Polykondensation oder Polyaddition erhalten werden. Aus der Klasse der Polymerisationsharze seien in erster Linie genannt, Polyolefine, wie Polyäthylen, Polypropylen oder Polyisobutylen, ferner substituierte Polyolefine, wie Polymerisate aus Vinylchlorid, Vinylacetat, Styrol, Acrylnitril, der Acrlysäure- und/oder Methacrylsäureester oder Butadien, sowie Kopolymerisate der erwähnten Monomeren, insbesondere ABS oder EVA.

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wiz.B. Alkydharze, als auch ungesättigte, wie beispielsweise Maleinatharze, ferner die linearen Polyester un Polyamide oder Silikone genannt.

Die erwähnten hochmolekularen Verbindungen können einzeln oder in Gemischen, als plastische Massen oder Schmelzen, die gegebenenfalls zu Fasern versponnen werden können, vorliegen.

Sie können auch im polymerisierten Zustand in gelöster Form als Filmbildner oder Bindemittel für Lacke oder Druckfarben vorliegen, wie z.B. Leinölfirnis, Nitrocellulose, Alkydharze, Melaminharze, Harnstoff-Formaldehydharze und Acrylharze.

Die Pigmentierung der hochmolekularen, organischen Substanzen mit den Verbindungen der Formeln I und/oder Ia erfolgt beispielsweise derart, dass man ein solches Pigment gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Verspinnen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverlieben. Als solche können z.B. Ester der Phosphorsäure, Phthalsäure oder Sebacinsäure dienen. Die Weichmacher können im erfindungsgemässen Verfahren vor oder nach der Einverleibung des Pigmentfarbstoffes in die Polymeren eingearbeitet werden. Es ist ferner moglich, zwecks Erzeilung verschiedener Farbtöne den hochmolekularen, organischen Stoffen neben den Verbindungen der Formeln I und Ia noch Füllstoffe bzw. andere farbgebende Bestandteile wie Weiss-, Bunt- oder Schwarzpigmente in beliebigen Mengen zuzufügen.

Zum Pigmentieren von Lacken und Druckfarben werden die hochmolekularen organischen Materialien und die Metallkomplexe der Formeln I und Ia gegebenenfalls zusammen mit Zusatzstoffen wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst heirauf alle Komponenten zusammenbringt.

Werden die erfindungsgemäss zu verwendenden Metallkomplexe in Kunststoffe eingearbeitet, so können si diese gegen die Einflüsse von Licht und Wetter stabilisieren. Die ist von besonderer Bedeutung, wenn die gefärbten Polymeren, insbesondere Polypropylen, zu Fasern verarbeitet werden.

Werden die erfindungsgemäss zu verwendenden Metallkomplexe in lichtstabilisiertes hochmolekulares organisches Material eingearbeitet, so wird in der Regel dessen Lichtstabilität nicht beeinträchtigt. Gegebenenfalls lässt sich auch eine synergistische Verbesserung der Lichtstabilität beobachten.

Die erhaltenen Färbungen enthalten vorzugsweise 0,01—20 Gew.% einer Verbindung der Formeln I oder Ia, beispielsweise in Kunststoffen, Fasern, Lacken und Drucken, und zeichnen sich durch gute Dispergierbarkeit, Ueberlackier-, Migrations-, Hitze-, Licht- und Wetterbeständigkeit, eine gute Farbstärke sowie durch einen guten Glanz aus.

Wenn die Verbindungen der Formeln I und/oder Ia in den angewandten Polymeren gellöst vorliegen, zeichnen sie sich ebenfalls durch reinen Farbton, gute Farbstärke und Lichtechtheit aus.

In den nachfolgenden Beispielen bedeuten die Teile, sofern nichts anderes angegeben wird, Gewichtsteile und die Prozente Gewichtsprozente.

Beispiel 1

65 g stabilisiertes Polyvinylchlorid, 35 g Dioctylphthalat und 0,2 g feinverteilter 1:2-Nickelkomplex der Formel XII

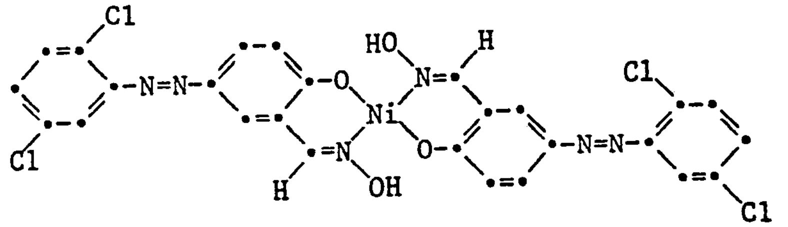

(XII)

werden miteinander verrührt und auf einem Zweiwalzenkalander 7 Minuten bei 160°C gewalzt. Man erhält eine gelb gefärbte Folie von sehr guter Licht- und Migrationsbeständigkeit.

Herstellung der feinverteilten Form des 1:2-Nickelkomplexes: 25 g 1:2-Nickelkomplex, 100 g fein gemahlenes Natriumchlorid und 30 g Diacetonalkohol werden zusammen während 5 Stunden unter Kühlung in einem Laboratoriumskneter geknetet. Man gibt die Mischung in 4000 ml Wasser filtriert die entstandene Suspension ab. Man wäscht das isolierte Pigment mit Wasser und trocknet es im Vakuum bei 80°C.

Beispiel 2

10 g Titandioxyd und 2 g 1:2-Nickelkomplex der Formel XII werden mit 88 g einer Mischung von 26,4 g Kokosalkydharz, 24,0 g Melamin-Formaldehydharz (50% Festkörpergehalt), 8,8 g Aethylenglykolmonomethyläther und 28,8 g Xylol während 8 Stunden in einer Kugelmühle vermahlen. Wird dieser Lack auf eine Aluminiumfolie gespritzt, 30 Minuten bei Raumtemperatur vorgetrocknet und dann während 30 Minuten bei 120°C eingebrannt, dann erhält man eine gelbe Lackierung, die sich bei guter Farbstärke durch eine sehr gute Ueberlackier-, Licht- und Wetterbeständigkeit auszeichnet.

Beispiel 3

4 g des fein verteilten Pigments gemäss Beispiel 1 (Formel XII) werden in 20 g Lösungsmittel der folgenden Zusammensetzung eingerührt: 50 g Solvesso 150® (Gemisch aromatischer Kohlenwasserstoffe), 15 g Butylacetat, 5 g Exkin II® (Verlaufmittel auf Ketoximbasis), 25 g Methyl-Isobutylketon, 5 g Silikonöl (1% in Solvesso 150®). Wenn die vollständige Feinverteilung erreicht ist (je nach Art des Rührens in ca. 15—60 Minuten), werden die Bindemittel zugesetzt, nämlich 48,3 g Baycryl L 530® (Acrylharz, 51% in Xylol/Butanol 3:1) und 23.7 g Maprenal TTX® (Melaminharz, 55% in Butanol). Nach kurzem Homogenisieren wird der Lack nach üblichen Methoden wie Spritzen und Tauchen oder speziell zur kontinuierlichen Beschichtung von Metallblechen im "Coil-Coating"—Verfahren appliziert und eingebrannt (Einbrennen 30 Minuten, 130°C). Die erhaltenen gelben Lackierungen zeichnen sich aus durch sehr guten Verlauf, hohen Glanz und gute Feinverteilung des Pigmentes, sowie durch gute Wetterbeständigkeit.

Beispiel 4

2 g 1:2-Nickelkomplex der Formel XII werden mit 36 g Tonerdehydrat, 60 g Leinölfirnis von mittlerer Viskosität und 2 g Kobaltlinoleat auf dem Dreiwalzenstuhl angerieben. Die mit der entstehenden Farbpaste erzeugten gelben Drucke sind farbstark und gut lichtecht.

Beispiel 5

Ein zur Faserherstellung geeignetes Polypropylengranulat wird mit 2,5% eines Pigmentpräparates, enthaltend 40% 1:2-Nickelkomplex der Formel XII gründlich gemischt. Die Mischung wird auf einer Schmelzspinnanlage bei 240—260°C zu Fäden versponnen, die anschliessend auf einer Streckzwirnanlage im Verhältnis 1:4 verstreckt und aufgespult werden. Man erhält eine kräftige gelbe Färbung, die sich durch gute Licht-, Wäsche-, Trockenreinigungs-, Angas- und Peroxydbleichechtheiten auszeichnet. Bei sonst analoger Arbeitsweise erhält man ebenfalls sehr echte, gelbe Ausfärbungen, wenn man anstelle von Polypropylengranulat Polycaprolactamgranulat verwendet, und die Mischung bei 260—290°C zu Fäden verspinnt.

Das oben eingesetzte Präparat wird wie folgt hergestellt:

40 g es gelben Pigmentes der Formel XII,

60 g Mg-Behenat und 500 g Natriumchlorid werden in einem Pulvermischer gründlich gemischt. Diese Mischung wird mit einer Laborknetmaschine bei 130°C bearbeitet. Das erhaltene Präparat wird mit Wasser vermahlen, filtriert, salzfrei gewaschen, getrocknet und pulverisiert.

Beispiele 6 bis 72

Ebenfalls echte gelbe Ausfärbungen in Kunstoffen, Lacken, Fasern und Druckfarben erhält man, wenn man analog zu den Beispielen 1 bis 5 arbeitet, jedoch anstelle des dort verwendeten Pigmentes einen entsprechenden 1:2-Metallkomplex der Formel XIII oder XIV einsetzt. Die in PVC erzielten Farbtöne (0,2% Pigment) sind in Tabellen I und II aufgeführt.

Tabelle I

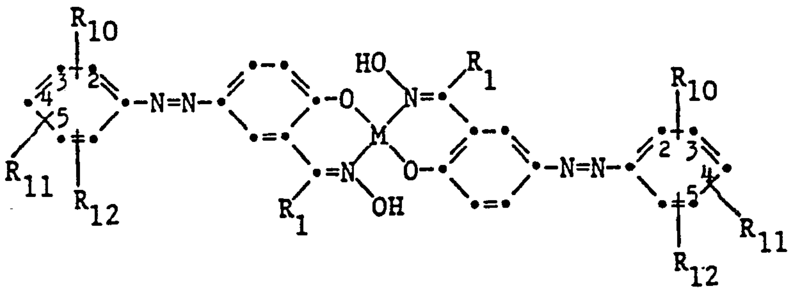

(XIII)

| Bsp. Nr. | $R_1$ | $R_{10}$ | $R_{11}$ | $R_{12}$ | M | Nuance in Weich-PVC |
|---|---|---|---|---|---|---|
| 6 | H | H | H | H | Cu | gelb |
| 7 | H | H | H | H | Ni | gelb |
| 8 | H | 2-Cl | H | H | Cu | gelb |
| 9 | H | 2-Cl | H | H | Ni | gelb |
| 10 | H | H | 3-Cl | H | Cu | gelb |
| 11 | H | H | 3-Cl | H | Ni | gelb |
| 12 | H | H | 4-Cl | H | Cu | gelb |
| 13 | H | H | 4-Cl | H | Ni | gelb |
| 14 | H | 2-Cl | 4-Cl | H | Cu | gelb |
| 15 | H | 2-Cl | 4-Cl | H | Ni | gelb |
| 16 | H | 2-Cl | 5-Cl | H | Cu | gelb |
| 17 | H | 2-Cl | 5-Cl | H | Ni | gelb |
| 18 | H | 3-Cl | 4-Cl | H | Cu | gelb |
| 19 | H | 3-Cl | 4-Cl | H | Ni | gelb |
| 20 | H | 3-Cl | 5-Cl | H | Cu | gelb |
| 21 | H | 3-Cl | 5-Cl | H | Ni | gelb |

Tabelle I (Fortsetzung)

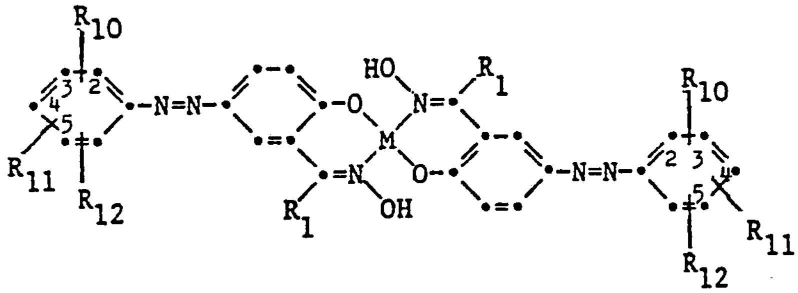

(XIII)

| Bsp. Nr. | $R_1$ | $R_{10}$ | $R_{11}$ | $R_{12}$ | M | Nuance in Weich-PVC |
|---|---|---|---|---|---|---|
| 22 | H | 2-Cl | 5-$CF_3$ | H | Cu | gelb |
| 23 | H | 2-Cl | 5-$CF_3$ | H | Ni | gelb |
| 24 | H | 4-$CH_3$ | H | H | Cu | gelb |
| 25 | H | 4-$CH_3$ | H | H | Ni | gelb |
| 26 | H | 2-$CH_3$ | 3-Cl | H | Cu | gelb |
| 27 | H | 2-$CH_3$ | 3-Cl | H | Ni | gelb |
| 28 | H | 2-$OCH_3$ | 5-Cl | H | Cu | gelb |
| 29 | H | 2-$OCH_3$ | 5-Cl | H | Ni | gelb |
| 30 | H | 2-$NO_2$ | H | H | Cu | gelb |
| 31 | H | 2-$NO_2$ | H | H | Ni | gelb |
| 32 | H | 4-$NO_2$ | H | H | Cu | braun |
| 33 | H | 4-$NO_2$ | H | H | Ni | braun |
| 34 | H | 2-$NO_2$ | 4-$CH_3$ | H | Cu | gelbst. braun |
| 35 | H | 2-$NO_2$ | 4-$CH_3$ | H | Ni | gelbst. braun |
| 36 | H | 2-Cl | 4-$NO_2$ | H | Cu | rot |
| 37 | H | 2-Cl | 4-$NO_2$ | H | Ni | rot |
| 38 | H | 2-Cl | 5-$CONH_2$ | H | Cu | gelb |
| 39 | H | 2-Cl | 5-$CONH_2$ | H | Ni | gelb |
| 40 | H | 2-Cl | 5-$COOC_2H_5$ | H | Cu | gelb |
| 41 | H | 2-Cl | 5-$COOC_2H_5$ | H | Ni | gelb |
| 42 | H | 2-$OCH_3$ | 5-CONH- 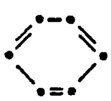 | H | Cu | gelb |
| 43 | H | 2-$OCH_3$ | 5-CONH- 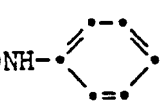 | H | Ni | gelb |

Tabelle I (Fortsetzung)

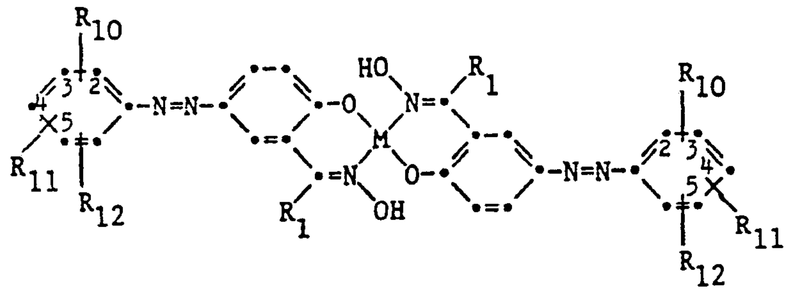

(XIII)

| Bsp. Nr. | $R_1$ | $R_{10}$ | $R_{11}$ | $R_{12}$ | M | Nuance in Weich-PVC |
|---|---|---|---|---|---|---|
| 44 | H | H | 3-$NHCOCH_3$ | H | Cu | gelb |
| 45 | H | H | 3-$NHCOCH_3$ | H | Ni | gelb |
| 46 | H | H | 4-COOH | H | Cu | gelb |
| 47 | H | H | 4-COOH | H | Ni | gelb |
| 48 | H | 2-Cl | 4-Cl | 5-Cl | Cu | gelb |
| 49 | H | 2-Cl | 4-Cl | 5-Cl | Ni | gelb |
| 50 | H | 2-Cl | 4-$NO_2$ | 5-Cl | Cu | braun |
| 51 | H | 2-Cl | 4-$NO_2$ | 5-Cl | Ni | braun |
| 52 | H | 2-$OCH_3$ | 4-Cl | 5-$OCH_3$ | Cu | gelb |
| 53 | H | 2-$OCH_3$ | 4-Cl | 5-$OCH_3$ | Ni | gelb |
| 54 | $CH_3$ | 2-Cl | H | H | Cu | gelb |
| 55 | $CH_3$ | 2-Cl | H | H | Ni | gelb |
| 56 | $CH_3$ | H | 3-Cl | H | Cu | gelb |
| 57 | $CH_3$ | H | 3-Cl | H | Ni | gelb |
| 58 | $CH_3$ | H | 4-Cl | H | Cu | gelb |
| 59 | $CH_3$ | H | 4-Cl | H | Ni | gelb |
| 60 | $CH_3$ | 2-Cl | 5-Cl | H | Cu | gelb |
| 61 | $CH_3$ | 2-Cl | 5-Cl | H | Ni | gelb |
| 62 | $CH_3$ | 2-Cl | 5-$CF_3$ | H | Cu | gelb |
| 63 | $CH_3$ | 2-Cl | 5-$CF_3$ | H | Ni | gelb |
| 64 | 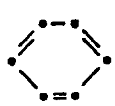 | 2-Cl | 5-Cl | H | Cu | gelb |
| 65 | 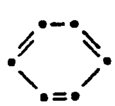 | 2-Cl | 5-Cl | H | Ni | gelb |

Tabelle I (Fortsetzung)

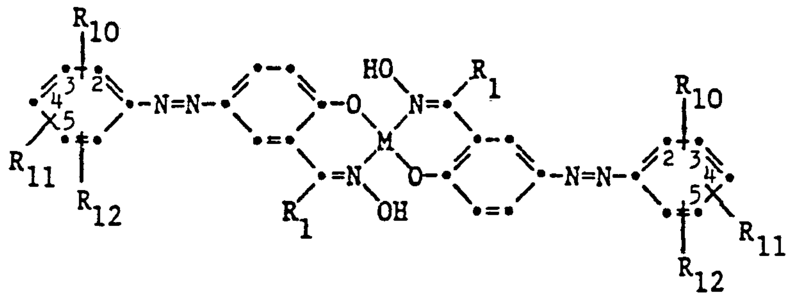

(XIII)

| Bsp. Nr. | $R_1$ | $R_{10}$ | $R_{11}$ | $R_{12}$ | M | Nuance in Weich-PVC |
|---|---|---|---|---|---|---|
| 66 | H | 3-Cl | 5-Cl | H | Co | gelbst. braun |
| 67 | H | 2-Cl | 4-Cl | 5-Cl | Co | rotst. braun |
| 68 | H | 3-Cl | 5-Cl | H | Zn | gelb |

Tabelle II

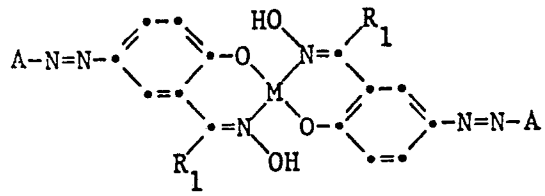

(XIV)

| Beispiel Nr. | $R_1$ | A | M | Nuance in Weich-PVC |
|---|---|---|---|---|
| 69 | H | 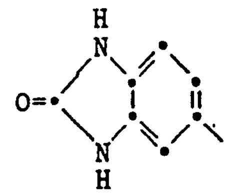 | Cu | gelb |
| 70 | H | 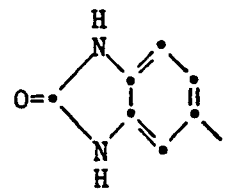 | Ni | gelb |
| 71 | H | 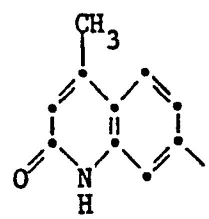 | Cu | gelb |
| 72 | H | 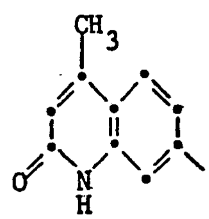 | Ni | gelb |

Beispiel 73

a) 16,2 g 2,5-Dichloranilin werden in 100 ml Eisessig und 30 ml 36%-iger Salzsäure verrührt. Man kühlt die so erhaltene Lösung auf 10°C ab und gibt dann 25 einer 4N Natriumnitritlösung unter die Oberfläche zu. Die so erhaltene Diazolösung wird 30 Minuten nachgerührt und klärfiltriert.

13,7 g Salicylaldoxim werden in 100 ml 2N Natriumhydroxid kalt gelöst und anschliesend mit 40 ml Eisessig gefällt. Bei 0—5°C wird in ca. 30 Minuten die Diazolösung zur Salicylaldoxim-Suspension gegeben, wobei der pH-Wert mit einer 2 N NaOH-Lösung auf 7 bis 8 gehalten wird. Man lässt die so erhaltene Suspension noch 6 bis 8 Stunden bei 20-25°C nachrühren, stellt dann den pH-Wert mit 36%-iger Salzsäure auf 4, filtriert das erhaltene Produkt ab und wäscht es mit heissem Wasser nach. Das Filtergut wird im Vakuumschrank bei 70—80°C getrocknet Man erhält 27,9 g (entsprechend 90% Theorie) eines gelben Pulvers der Formel

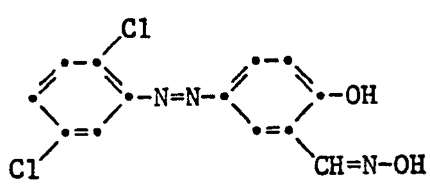

b) 6,2 g 5-(2',5'-Dichlorphenylazo)-2-hydroxybenzaldoxim und 2,5 g Nickelacetat·$4H_2O$ werden in 100 ml Dimethylformamid während 3 Stunden bei 120°C gerührt. Die erhaltene Suspension wird bei 80°C abfiltriert und der Filterrückstand mit kaltem Dimethylformamid, dann kaltem Aethanol gewaschen. Nach Trocknen im Vakuumschrank bei 60°C erhält man 6,1 g eines gelben Pulvers der Formel

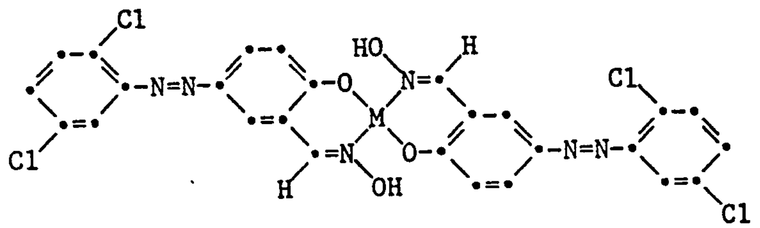

| mit folgender Mikroanalyse: | C | H | Cl | N | Ni |
|---|---|---|---|---|---|
| Berechnet (in %): | 45,99 | 2,67 | 20,89 | 12,38 | 8,65 |
| Gefunden (in %): | 46,12 | 2,40 | 20,93 | 12,44 | 8,57 |

Beispiel 74

a) 188 g 4-Chlor-2,5-dimethoxy-anilin werden in 2000 ml Wasser und 270 ml 36%-iger Salzsäure verrührt. Man kühlt die erhaltene Suspension auf 10°C ab und gibt dazu dann 270 ml einer 4N Natriumnitritlösung unter die Oberfläche. Die erhaltene Diazoniumsalzlösung wird während 30 Minuten nachgerührt und klärfiltriert.

122 g Salicylaldehyd werden in 2000 ml Aethylalkohol gelöst und mit 100 g Natriumacetat versetzt. Bei 0—5°C wird in ca. 30 Minuten die obige Diazolösung zur Salicylaldehydlösung gegeben, wobei der pH-Wert der Reaktionsmischung mit einer 2 NaOH-Lösung auf 7 bis 8 gehalten wird. Man lässt die erhaltene Suspension noch 8—10 Stunden bei 20—22°C nachrühren, stellt dann den pH-Wert mit 36%-iger Salzsäure auf 1,5, filtriert das Produkt ab und wäscht es mit heissem Wasser nach. Das Filtergut wird im Vakuumschrank bei 70—80°C getrocknet. Man erhält 226 g, entsprechend 71% der Theorie, eines gelben Pulvers der Formel

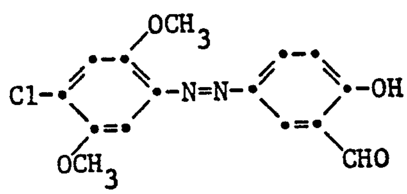

b) 32,1 g 5-(4'-Chlor-2',5'-dimethoxyphenylazo)-2-hydroxybenzaldehyd werden in 300 ml Isopropanol suspendiert und mit 6,9 g Hydroxylamin Hydrochlorid und 16,4 g Natriumacetat wasserfrei versetzt. Das erhaltene Reaktionsgemisch wird bei 70—80°C 18 Stunden gerührt, das Produkt abfiltriert und mit kaltem Isopropanol und dann mit heissem Wasser gewaschen. Das erhaltene Filtergut wird im Vakuumschrank bei 70—80°C getrocknet. Man erhält 30 g, entsprechend 30% der Theorie, eines gelben Pulvers der Formel

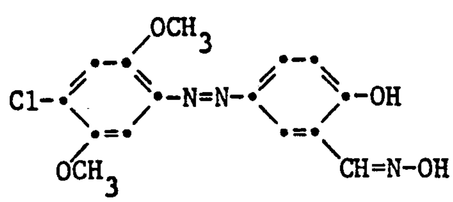

c) 6,72 g 5-(4'-Chlor-2',5'-dimethoxy-phenylazo)-2-hydroxy-benzaldoxim und 2,5 g Nickelacetat·$4H_2O$ werden in 100 ml Dimethylformamid während 3 Stunden bei 120°C gerührt. Man filtriert das Reaktionsgemisch bei 80°C ab und wäscht den Filterrückstand mit kaltem Dimethylformamid, dann mit kaltem Aethanol. Nach Trocknen im Vakuumschrank bei 70—80°C erhält man 5,8 g eines gelben Pulvers der Formel

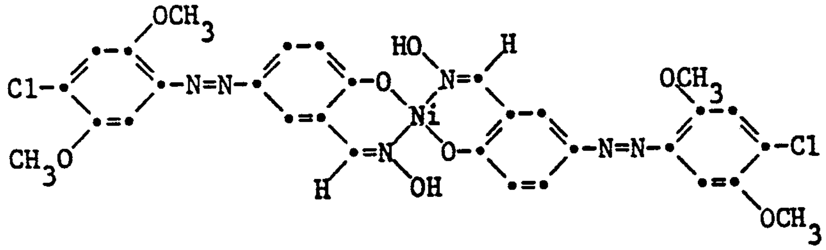

| mit der folgenden Mikroanalyse: | C | H | Cl | N | Ni |
|---|---|---|---|---|---|
| Berechnet (in %): | 49,48 | 3,60 | 9,74 | 11,54 | 8,65 |
| Gefunden (in %): | 49,44 | 3,61 | 9,71 | 11,54 | 8,57 |

### Beispiel 75

29,5 g 5-(2',5'-Dichlor-phenylazo)-2-hydroxy-benzaldehyd werden in 600 ml einer 3%-igen Natriumhydroxydlösung suspendiert und während einer Stunde mit einer Lösung von 7 g Hydroxylamin Chlorhydrat in 50 ml Wasser versetzt. Mann rührt die rotbraune Reaktionsmischung 3 Stunden bei 90°C. Nach Filtration dieser Reaktionsmischung wird das erhaltene Filtrat mit ca. 50 ml 36%-iger Salzsäure auf einen pH-Wert von 1 gestellt, der ausgefallene gelbe Niederschlag abgesaugt, danach mit Wasser gewaschen und im Vakuum bei 70—80°C getrocknet. Man erhält 26 g eines gelben Pulvers der Formel

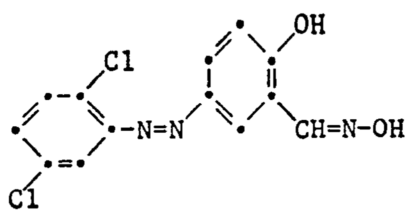

| mit folgender Mikroanalyse: | C | H | Cl | N | O |
|---|---|---|---|---|---|
| Berechnet (in %): | 50,35 | 2,93 | 22,86 | 13,55 | 10,32 |
| Gefunden (in %): | 50,38 | 2,91 | 23,44 | 13,15 | 10,10 |

### Beispiel 76

5,5 g 5-(3'-Chlor-phenylazo)-2-hydroxy-benaldoxim werden in 80 ml Wasser suspendiert und mit 2 ml einer 30%-igen Natriumhydroxyd-Lösung versetzt. Man gibt bei 70—80°C innerhalb von 15 Minuten eine Lösung von 2,6 g $NiCl_2 \cdot 6H_2O$ in 50 ml Wasser zu. Die entstandene grüngelbe Mischung wird 18 Stunden bei 80—90°C gerührt, das erhaltene Produkt heiss abgesaugt und mit warmem Wasser gewaschen. Nach dem Trocknen im Vakuum 70—80°C erhält man ein gelbes Pigment der Formel

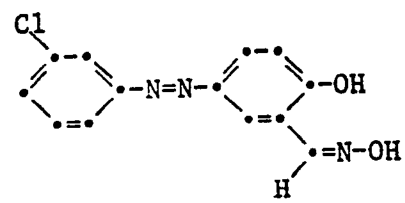

als 1:2-Nickel-Komplex.

### Beispiele 77—121

Ebenfalls echte Ausfärbungen in Kunststoffen, Lacken, Fasern und Druckfarben erhält man, wenn man analog zu den Beispielen 1 bis 5 arbeitet, jedock anstelle des dort verwendeten Pigmentes einen entsprechenden 1:2-Metallkomplex der Formeln XV bis XVII einsetzt. Die in PVC erzielten Farbtöne (0,2% Pigment) sind in den Tabellen III bis V aufgeführt.

Tabelle III

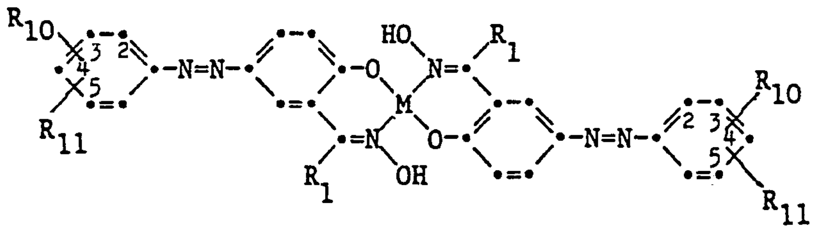

(XV)

| Bsp. Nr. | $R_1$ | $R_{10}$ | $R_{11}$ | M | Nuance in Weich-PVC |
|---|---|---|---|---|---|
| 77 | H | H | 4-NHCO- 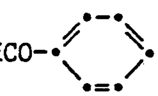 | Cu | gelb |
| 78 | H | H | 4-NHCO- 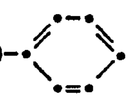 | Ni | orange-gelb |
| 79 | H | H | 4-NHCO- 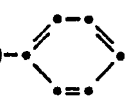 | Co | orange-gelb |
| 80 | H | H | $4-SO_2NH_2$ | Cu | gelb |
| 81 | H | H | $4-SO_2NH_2$ | Ni | gelb |
| 82 | $CH_3$ | H | $4-SO_2NH_2$ | Cu | gelb |
| 83 | $CH_3$ | H | $4-SO_2NH_2$ | Ni | gelb |
| 84 | H | H | 4-N=N- 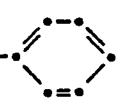 | Cu | gelb |
| 85 | H | H | 4-N=N- 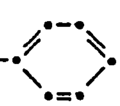 | Ni | gelb |
| 86 | $CH_3$ | H | 4-N=N- 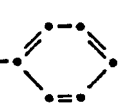 | Cu | orange |

Tabelle III (Fortsetzung)

| Bsp. Nr. | $R_1$ | $R_{10}$ | $R_{11}$ | M | Nuance in Weich-PVC |
|---|---|---|---|---|---|
| 87 | $CH_3$ | H | 4-N=N- 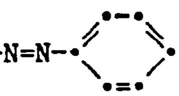 | Ni | orange |
| 88 | H | 2-CN | H | Cu | gelb |
| 89 | H | 2-CN | H | Ni | gelb |
| 90 | $CH_3$ | 2-CN | H | Cu | gelb |
| 91 | $CH_3$ | 2-CN | H | Ni | gelb |
| 92 | H | 2-$OCH_3$ | H | Cu | braungelb |
| 93 | H | 2-$OCH_3$ | H | Ni | braungelb |
| 94 | $CH_3$ | 2-$OCH_3$ | H | Cu | braungelb |
| 95 | $CH_3$ | 2-$OCH_3$ | H | Ni | braungelb |
| 96 | $CH_3$ | H | 4-$OCH_3$ | Cu | gelb |
| 97 | $CH_3$ | H | 4-$OCH_3$ | Ni | gelb |
| 98 | $CH_3$ | 2-$COOCH_3$ | 5-$COOCH_3$ | Cu | orange |
| 99 | $CH_3$ | 2-$COOCH_3$ | 5-$COOCH_3$ | Ni | orange |

Tabelle IV

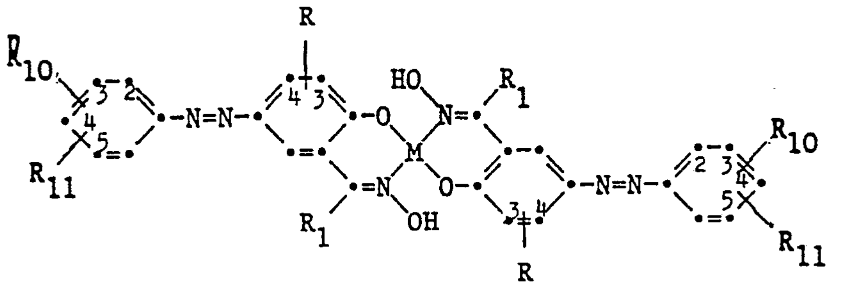

(XVI)

| Bsp. Nr. | $R_1$ | $R_{10}$ | $R_{11}$ | R | M | Nuance in Weich-PVC |
|---|---|---|---|---|---|---|
| 100 | H | 2-Cl | 5-Cl | $3-OCH_3$ | Cu | gelb |
| 101 | H | 2-Cl | 5-Cl | $3-OCH_3$ | Ni | gelb |
| 102 | H | 2-Cl | $5-CF_3$ | $3-OCH_3$ | Cu | gelb |
| 103 | H | 2-Cl | $5-CF_3$ | $3-OCH_3$ | Ni | gelb |
| 104 | $CH_3$ | 2-Cl | H | $3-OCH_3$ | Cu | gelb |
| 105 | $CH_3$ | 2-Cl | H | $3-OCH_3$ | Ni | gelb |
| 106 | H | H | $4-OCH_3$ | $3-OCH_3$ | Cu | gelb |
| 107 | H | H | $4-OCH_3$ | $3-OCH_3$ | Ni | gelb |
| 108 | H | $2-COOCH_3$ | $5-COOCH_3$ | $3-OCH_3$ | Cu | gelb |
| 109 | H | $2-COOCH_3$ | $5-COOCH_3$ | $3-OCH_3$ | Ni | gelb |
| 110 | H | 2-Cl | 5-Cl | 3-Cl | Cu | gelb |
| 111 | H | 2-Cl | 5-Cl | 3-Cl | Ni | gelb |
| 112 | $CH_3$ | 2-Cl | 5-Cl | $4-CH_3$ | Cu | gelb |
| 113 | $CH_3$ | 2-Cl | 5-Cl | $4-CH_3$ | Ni | gelb |

Tabelle IV (Fortsetzung)

| Bsp. Nr. | $R_1$ | $R_{10}$ | $R_{11}$ | R | M | Nuance in Weich-PVC |
|---|---|---|---|---|---|---|
| 114 | H | 2-Cl | 5-$CONHCH_3$ | 3-$OCH_3$ | Cu | gelb |
| 115 | H | 2-Cl | 5-$CONHCH_3$ | 3-$OCH_3$ | Ni | gelb |
| 116 | H | 2-$CH_3$ | 5-COO- 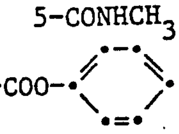 | 3-$OCH_3$ | Cu | gelb |
| 117 | H | 2-$CH_3$ | 5-COO- 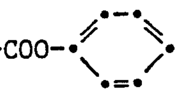 | 3-$OCH_3$ | Ni | gelb |

Tabelle V

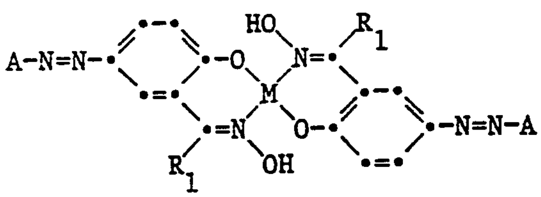

(XVII)

| Bsp. Nr. | $R_1$ | A | M | Nuance in Weich-PVC |
|---|---|---|---|---|
| 118 | H | 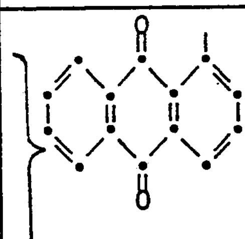 | Cu | braun |
| 119 | H | | Ni | braun |
| 120 | H | 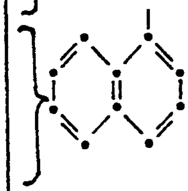 | Cu | gelb |
| 121 | H | | Ni | gelb |

Beispiel 122

Arbeitet man wie in Beispiel 2 beschrieben, verwendet aber anstelle des 1:2-Ni-Komplexes der Formel XII den 1:2-Ni-Komplex der Formel XVIII, so erhält man ebenfalls eine gelbe, sehr echte Lackierung.

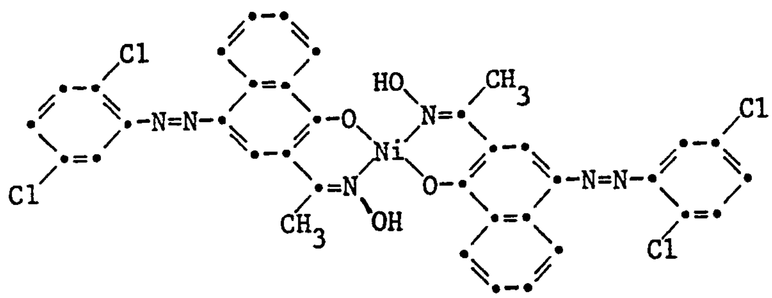

(XVIII)

Beispiel 123—125

Ebenfalls echte Ausfärbungen in Kunststoffen, Lacken, Fasern und Druckfarben erhält man, wenn man analog zu den Beispielen 1 bis 5 arbeitet, jedoch anstelle des dort verwendeten Pigmentes einen entsprechenden 1:2-Ni-Komplex der Formel XIX einsetzt. Die in Welch-PVC erzielten Farbtöne sin in der Tabelle VI aufgefürt.

Tabelle VI

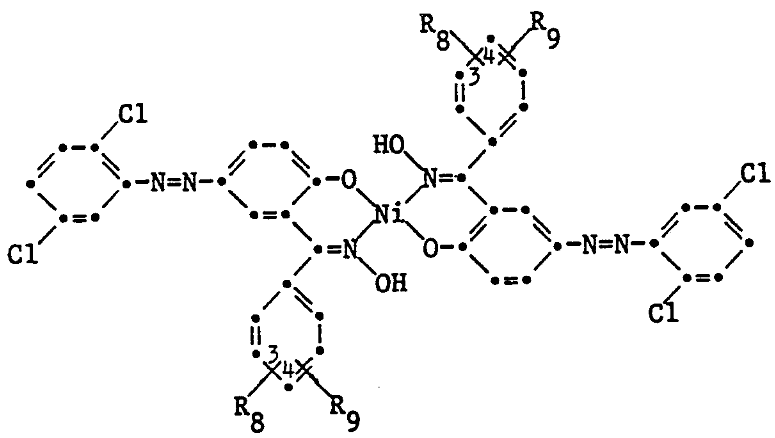

(XIX)

| Bsp. Nr. | $R_8$ | $R_9$ | Nuance in Weich-PVC |
|---|---|---|---|
| 123 | 4-Cl | H | gelb |
| 124 | $3\text{-}CH_3$ | H | gelb |
| 125 | $4\text{-}OCH_3$ | H | gelb |

**Patentansprüche**

1. Verfahren zum Färben von hochmolekularem organischem Material in der Masse, dadurch gekennzeichnet, dass man Verbingungen der Formeln I und/oder Ia

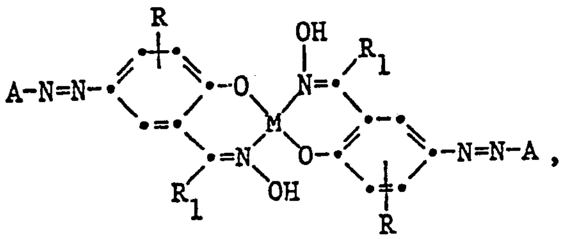

(I)

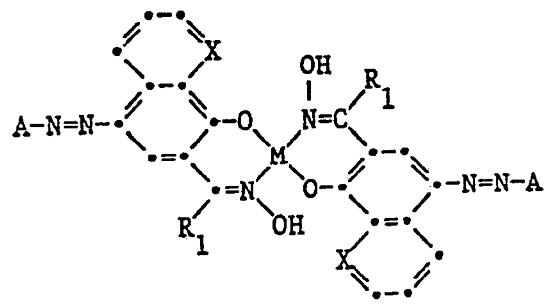

(Ia)

verwendet, worin

A einen unsubstituierten oder durch Halogen, Phenyl, Phenylazo, Carboxy, $-CF_3$, $-NO_2$, $-CN$, $C_1-C_4$ Alkyl, $C_1-C_4$ Alkoxy, $-CONH_2$, $-SO_2NH_2$, $-CONHR_2$, $-COOR_3$, $-NHCOR_4$ oder $-SO_2NHR_2$ substituierten Phenylrest bedeutet, wobei $R_2$ $C_1-C_4$ Alkyl oder unsubstituiertes oder durch Halogen, $-CF_3$, $C_1-C_4$ Alkyl, $C_1-C_4$ Alkoxy, $-NO_2$, $-CN$, $-CONH_2$, $-SO_2NH_2$, $-CONHC_1-C_4$ Alkyl, $-CONHC_6H_5$, $C_2-C_5$ Alkoxycarbonyl, $C_2-C_5$ N-Alkylcarbamoyl, $-NHCOC_6H_5$, $-SO_2NHC_1-C_4$ Alkyl oder $-SO_2NHC_6H_5$ substituiertes Phenyl, $R_3$ $C_1-C_4$ Alkyl, unsubstituiertes oder durch Halogen oder $C_1-C_4$ Alkyl substituiertes Benzyl oder unsubstituiertes oder durch Halogen, $C_1-C_4$ Alkyl, $C_1-C_4$ Alkoxy, $C_2-C_5$ Alkoxycarbonyl oder $C_2-C_5$ N-Alkylcarbamoyl substituiertes Phenyl und $R_4$ $C_1-C_4$ Alkyl oder unsubstituiertes oder durch Halogen, $C_1-C_4$ Alkyl, $C_1-C_4$ Alkoxy, $-NO_2$ oder $C_2-C_5$ N-Alkylcarbamoyl substituiertes Phenyl darstellen, ferner A einen unsubstituierten oder durch Halogen oder $-CH_3$ substituierten Naphthylrest, einen unsubstituierten oder durch Halogen, $-NO_2$, $-CH_3$, $-OCH_3$, $-NHCOCH_3$ oder $-NHCOC_6H_5$ substituierten Anthrachinonylrest, oder einen unsubstituierten oder durch $-Cl$, $-CH_3$ oder $-OCH_3$ substituierten heterocyclischen aromatischen Rest bedeutet,

R $-H$, $-Cl$, $-CH_3$ oder $-OCH_3$, $R_1$ $-H$, $C_1-C_4$ Alkyl oder unsubstituiertes oder durch Halogen, $C_1-C_4$ Alkyl, $C_1-C_4$ Alkoxy, $-NO_2$, $-CONH_2$, $-CONHR_2$ oder $C_2-C_5$ N-Alkylcarbamoyl substituiertes Phenyl, X $-CH=$ oder $-N=$ und M ein zweiwertiges Uebergangsmetall darstellen, wobei $R_2$ die oben im Anspruch 1 angegebene Bedeutung hat.

2. Verfahren gemäss Anspruch 1, dadurch gekennzeichnet, dass man Verbindungen der Formel I verwendet, worin R $-H$, $R_1$, $-H$, $-CH_3$ oder Phenyl und M ein Kupfer- oder Nickelatom bedeuten und A für den Rest der Formel II

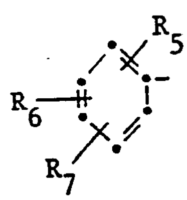

(II)

steht,

worin $R_5$ $-H$ oder $-Cl$, $-CH_3$, $-OCH_3$, $-NO_2$, $-CN$, $-CF_3$, $-COOH$, $-CONH_2$, $-SO_2NH_2$, $-CONHR_2$, $-COOR_3$ oder $-NHCOR_4$, $R_6$ $-H$ oder $-Cl$, $-CH_3$, $-OCH_3$, $-CONH_2$ oder $-COOR_3$ und $R_7$ $-H$ oder $-Cl$ darstellen, wobei $R_2$ $C_1-C_4$ Alkyl oder unsubstituiertes oder durch $-Cl$, $-CF_3$, $-CH_3$, $-OCH_3$, $-NO_2$, $-CN$, $-CONH_2$, $-SO_2NH_2$, $-CONHC_1-C_4$ Alkyl, $-CONHC_6H_5$, $C_2-C_5$ Alkoxycarbonyl, $C_2-C_5$ N-Alkylcarbamoyl, $-NHCOC_6H_5$, $-SO_2NHC_6H_5$ oder $-SO_2NHC_1-C_4$ Alkyl substituiertes Phenyl, $R_3$ $C_1-C_4$ Alkyl, Benzyl unsubstituiertes oder durch $-Cl$, $-CH_3$, $-OCH_3$, $C_2-C_5$ Alkoxycarbonyl oder $C_2-C_5$ N-Alkylcarbamoyl substituiertes Phenyl und $R_4$ $-CH_3$ oder unsubstituiertes oder durch $-Cl$, $-CH_3$, $-OCH_3$, $-NO_2$ oder $C_2-C_5$ N-Alkylcarbamoyl substituiertes Phenyl darstellen.

3. Verfahren gemäss Anspruch 2, wobei in der Formel I R $-H$, $R_1$ $-H$ oder $-CH_3$, M ein Nickelatom und A die Gruppe der Formel II gemäss Anspruch 2 bedeuten, worin $R_5$ $-H$, $-Cl$, $-CH_3$, $-OCH_3$, $-NO_2$, $-CF_3$, $-COOH$, $-COOCH_3$, $-CONH_2$, $-CONHC_6H_5$, $-NHCOCH_3$ oder $-NHCOC_6H_5$, $R_6$ $-H$, $-Cl$ oder $-CH_3$ und $R_7$ $-H$ oder $-Cl$ darstellen.

4. Verbindungen der Formel I gemäss Anspruch 1, dadurch gekennzeichnet, dass in der Formel I, wenn R $-Cl$, $-CH_3$ oder $-OCH_3$ und $R_1$ $-H$, $C_1-C_4$ Alkyl oder unsubstituiertes oder durch Halogen, $C_1-C_4$ Alkyl, $C_1-C_4$ Alkoxy, $-NO_2$, $-CONH_2$, $-CONHR_2$ oder $C_2-C_5$ N-Alkylcarbamoyl substituiertes Phenyl darstellen, A einen unsubstituierten oder durch Halogen, Phenyl, Phenylazo, $-CF_3$, $-NO_2$, $-CN$, $-COOH$, $C_1-C_4$ Alkyl, $C_1-C_4$ Alkoxy, $-CONH_2$, $-SO_2NH_2$, $-CONHR_2$, $-COOR_3$, $-NHCOR_4$ oder $-SO_2NHR_2$ substituierten Phenylrest bedeutet, wobei $R_2$ $C_1-C_4$ Alkyl oder unsubstituiertes oder durch Halogen, $-CF_3$, $C_1-C_4$ Alkyl,

$C_1$—$C_4$ Alkoxy, —$NO_2$, —CN, —$CONH_2$, $SO_2NH_2$, —$CONHC_1$—$C_4$ Alkyl, —$CONHC_6H_5$, $C_2$—$C_5$ Alkoxycarbonyl, $C_2$—$C_5$ N-Alkylcarbamoyl, —$NHCOC_6H_5$, —$SO_2NHC_1$—$C_4$ Alkyl oder —$SO_2NHC_6H_5$ substituiertes Phenyl, $R_3$ $C_1$—$C_4$ Alkyl, unsubstituiertes oder durch Halogen oder $C_1$—$C_4$ Alkyl substituiertes Benzyl oder unsubstituiertes oder durch Halogen, $C_1$—$C_4$ Alkyl, $C_1$—$C_4$ Alkoxy, $C_2$—$C_5$ Alkoxycarbonyl oder $C_2$—$H_5$ N-Alkylcarbamoyl substituiertes Phenyl und $R_4$ $C_1$—$C_4$ Alkyl oder unsubstituiertes oder durch Halogen, $C_1$—$C_4$ Alkyl, $C_1$—$C_4$ Alkoxy, —$NO_2$ oder $C_2$—$C_5$ N-Alkylcarbamoyl substituiertes Phenyl darstellen, ferner A einen unsubstituierten oder durch Halogen oder —$CH_3$ substituierten Naphthylrest, einen unsubstituierten oder durch Halogen, —$NO_2$, —$CH_3$, —$OCH_3$, —$NHCOCH_3$ oder —$NHCOC_6H_5$ substituierten Anthrachinonylrest, oder einen unsubstituierten oder durch —Cl, —$CH_3$ oder —$OCH_3$ substituierten heterocyclischen aromatischen Rest bedeutet, und M ein zweiwertiges Uebergangsmetall darstellt, und wenn R und $R_1$ beide ein Wasserstoffatom sind, M die oben im Anspruch 4, angegebene Bedeutung hat, und A für die Gruppe der Formel III

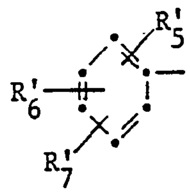
(III)

steht, worin $R_5'$ —CN, —$CONHR_2$, —$COOR_3$ oder —$NHCOR_4$, $R_6'$ —H, Halogen, $C_1$—$C_4$ Alkyl, $C_1$—$C_4$ Alkoxy, —$CONH_2$, —$CONHR_2$, —$COOR_3$ oder —$NHCOR_4$ bedeuten, wobei $R_2$, $R_3$ und $R_4$ die oben im Anspruch 4 angegebene Bedeutung haben und $R_7'$ —H oder Halogen bedeutet, oder ferner A einen unsubstituierten oder durch Halogen oder —$CH_3$ substituierten Naphthylrest, einen unsubstituierten oder durch Halogen, —$NO_2$ —$CH_3$, —$OCH_3$, —$NHCOCH_3$ oder —$NHCOC_6H_5$ substituierten Anthrachinonylrest, oder einen unsubstituierten oder durch —Cl, —$CH_3$ oder —$OCH_3$ substituierten heterocylischen aromatischen Rest bedeutet.

5. Verbindungen der Formel I gemäss Anspruch 4, worin, wenn $R_1$ —$CH_3$ oder Phenyl darstellt, R —H, und M ein Kupfer- oder Nickelatom bedeuten, und A für den Rest der Formel II

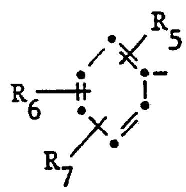
(II)

steht, worin $R_5$ —H oder —Cl, —$CH_3$, —$OCH_3$, —$NO_2$, —CN, —$CF_3$, —COOH, —$CONH_2$, —$SO_2NH_2$, —$CONHR_2$, —$COOR_3$ oder —$NHCOR_4$, $R_6$ —H oder —Cl, —$CH_3$, —$OCH_3$, —$CONH_2$ oder —$COOR_3$, und $R_7$ —H oder —Cl darstellen, wobei $R_2$ $C_1$—$C_4$-Alkyl oder unsubstituiertes oder durch —Cl, —$CF_3$, —$CH_3$, —$OCH_3$, —$NO_2$, —CN, —$CONH_2$, —$SO_2NH_2$, —$CONHC_1$—$C_4$ Alkyl, —$CONHC_6H_5$, $C_2$—$C_5$ Alkoxycarbonyl, $C_2$—$C_5$ N-Alkylcarbamoyl, —$NHCOC_6H_5$, —$SO_2NHC_6H_5$ oder —$SO_2NHC_1$—$C_4$ Alkyl substituiertes Phenyl, $R_3$ $C_1$—$C_4$ Alkyl, Benzyl, unsubstituiertes oder durch —Cl, —$CH_3$, —$OCH_3$, $C_2$—$C_5$ Alkoxycarbonyl oder $C_2$—$C_5$ N-Alkylcarbamoyl substituiertes Phenyl und $R_4$ —$CH_3$ oder unsubstituiertes oder durch —Cl, —$CH_3$, —$OCH_3$, —$NO_2$ oder $C_2$—$C_5$ N-Alkylcarbamoyl substituiertes Phenyl darstellen, und wenn $R_1$ ein Wasserstoffatom ist, R und M die oben im Anspruch 5 angegebene Bedeutung haben, und A für den Rest der Formel III

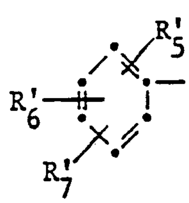
(III)

steht, worin $R_5'$ —CN, —$CONHR_2$, —$COOR_3$ oder —$NHCOR_4$, $R_6'$ —H, —Cl, $C_1$—$C_4$ Alkyl, $C_1$—$C_4$ Alkoxy, —$CONH_2$, —$CONHR_2$, —$COOR_3$ oder $NHCOR_4$ bedeuten, wobei $R_2$, $R_3$ und $R_4$ die oben im Anspruch 5 angegebene Bedeutung haben, und $R_7'$ —H oder —Cl bedeutet.

6. Verbindungen der Formel I gemäss Anspruch 4, worin R und $R_1$ ein Wasserstoffatom und M ein Nickelatom bedeuten, und A für die Gruppe der Formel III steht, worin $R_5'$ —$CONH_2$, —$CONHCH_3$, —$CONHC_6H_5$ oder —$COOCH_3$, $R_6'$ —H, —Cl oder —$CH_3$ und $R_7'$ —H oder —Cl bedeuten.

7. Verbindungen der Formel Ia gemäss Anspruch I worin A einen unsubstituierten oder durch Halogen, Phenyl, Phenylazo, —$CF_3$, —COOH, —$NO_2$, —CN, $C_1$—$C_4$ Alkyl, $C_1$—$C_4$ Alkoxy, —$CONH_2$, —$SO_2NH_2$,

—$CONHR_2$, —$COOR_3$, —$NHCOR_4$ oder —$SO_2NHR_2$ substituierten Phenylrest bedeutet wobei $R_2$ $C_1$—$C_4$ Alkyl oder unsubstituiertes oder durch Halogen, —$CF_3$, $C_1$—$C_4$-Alkyl, $C_1$—$C_4$ Alkoxy, —$NO_2$, —CN, —$CONH_2$, —$SO_2NH_2$, —$CONHC_1$—$C_4$ Alkyl, —$CONHC_6H_5$, $C_2$—$C_5$ Alkoxycarbonyl, $C_2$—$C_5$ N-Alkylcarbamoyl, —$NHCOC_6H_5$, —$SO_2NHC_1$—$C_4$ Alkyl oder —$SO_2NHC_6H_5$ substituiertes Phenyl, $R_3$ $C_1$—$C_4$-Alkyl, unsubstituiertes oder durch Halogen oder $C_1$—$C_4$ Alkyl substituiertes Benzyl oder unsubstituiertes oder durch Halogen, $C_1$—$C_4$-Alkyl, $C_1$—$C_4$ Alkoxy, $C_2$—$C_5$ Alkoxycarbonyl oder $C_2$—$C_5$ N-Alkylcarbamoyl substituiertes Phenyl und $R_4$ $C_1$—$C_4$ Alkyl oder unsubstituiertes oder durch Halogen, $C_1$—$C_4$ Alkyl, $C_1$—$C_4$ Alkoxy, —$NO_2$ oder $C_2$—$C_5$ N-Alkylcarbamoyl substituiertes Phenyl darstellen, ferner A einen unsubstituierten oder durch Halogen oder —$CH_3$ substituierten Naphthylrest, einen unsubstituierten oder durch Halogen, —$NO_2$, —$CH_3$, —$OCH_3$, —$NHCOCH_3$ oder —$NHCOC_6H_5$ substituierten Anthrachinonylrest, oder einen unsubstituierten oder durch —Cl, —$CH_3$ oder —$OCH_3$ substituierten heterocyclischen atomatischen Rest bedeutet, $R_1$ —H, $C_1$—$C_4$ Alkyl, oder unsubstituiertes oder durch Halogen, $C_1$—$C_4$ Alkyl, $C_1$—$C_4$ Alkoxy, —$NO_2$, —$CONH_2$, —$CONHR_2$ oder $C_2$—$C_5$ N-Alkylcarbamoyl substituiertes Phenyl bedeutet, X —CH= oder —N=, wobei, wenn X —CH= darstellt $R_1$ kein Wasserstoffatom sein darf, und M ein zweiwertiges Uebergangsmetall darstellt.

8. In der Masse gefärbtes Material enthaltend eine Verbindung der Formeln I und/oder Ia gemäss Anspruch 1.

**Revendications**

1. Procédé pour colorer des matières organiques macromoléculaires dans la masse, procédé caractérisé en ce qu'on utilise des composés répondant à l'une des formules I et Ia:

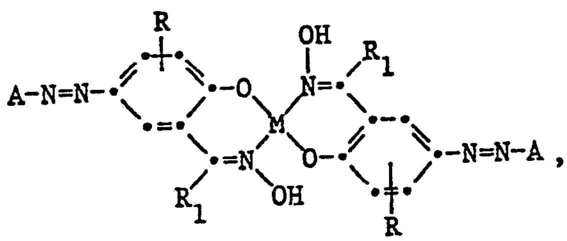

(I)

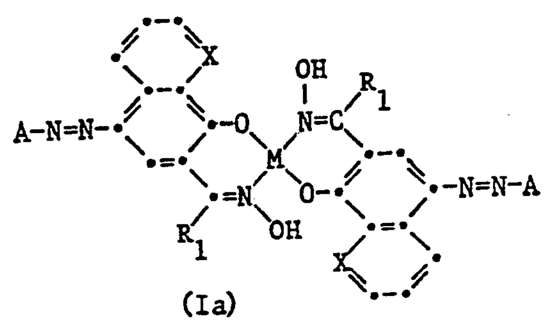

(Ia)

dans lesquelles

A représente: un radical phényle non substitué ou porteur d'un halogène ou d'un radical phényle, phénylazo, carboxy, —$CF_3$, —$NO_2$, —CN, alkyle en $C_1$—$C_4$, alcoxy en $C_1$—$C_4$, —$CONH_2$, —$SO_2NH_2$, —$CONHR_2$, —$COOR_3$, —$NHCOR_4$ ou —$SO_2NHR_2$, le symbole $R_2$ représentant un alkyle en $C_1$—$C_4$ ou un phényle non substitué ou porteur d'un halogène, d'un —$CF_3$, d'un alkyle en $C_1$—$C_4$, d'un alcoxy en $C_1$—$C_4$, d'un —$NO_2$, d'un —CN, d'un —$CONH_2$, d'un —$SO_2NH_2$, d'un —CONH-alkyl à alkyle en $C_1$—$C_4$, d'un —$CONHC_6H_5$, d'un alcoxycarbonyle en $C_2$—$C_5$, d'un N-alkyl-carbamoyle en $C_2$—$C_5$, d'un —$NHCOC_6H_5$, d'un —$SO_2$NH-alkyl à alkyle en $C_1$—$C_4$ ou d'un —$SO_2NHC_6H_5$, $R_3$ représentant un alkyle en $C_1$—$C_4$, un benzyle non substitué ou porteur d'un halogène ou d'un alkyle en $C_1$—$C_4$ ou un phényle non substitué ou porteur d'un halogène, d'un alkyle en $C_1$—$C_4$, d'un alcoxy en $C_1$—$C_4$, d'un alcoxycarbonyle en $C_2$—$C_5$ ou d'un N-alkyl-carbamoyle en $C_2$—$C_5$, et $R_4$ représentant un alkyle en $C_1$—$C_4$ ou un phényle non substitué ou porteur d'un halogène, d'un alkyle en $C_1$—$C_4$, d'un alcoxy en $C_1$—$C_4$, d'un —$NO_2$ ou d'un N-alkyl-carbamoyle en $C_2$—$C_5$, un radical naphtyle non substitué ou porteur d'un halogène ou d'un —$CH_3$, un radical anthraquinonyle non substitué ou porteur d'un halogène, d'un —$NO_2$, d'un —$CH_3$, d'un —$OCH_3$, d'un —$NHCOCH_3$ ou d'un —$NHCOC_6H_5$, ou un radical aromatique hétérocyclique non substitué ou porteur d'un —Cl, d'un $CH_3$ ou d'un —$OCH_3$, R représente —H, —Cl, —$CH_3$ ou —$OCH_3$, $R_1$ représente —H, un alkyle en $C_1$—$C_4$ ou un phényle non substitué ou porteur d'un halogène, d'un alkyle en $C_1$—$C_4$, d'un alcoxy en $C_1$—$C_4$, d'un —$NO_2$, d'un —$CONH_2$, d'un —$CONHR_2$ ou d'un N-alkyl-carbamoyle en $C_2$—$C_5$, le symbole $R_2$ ayant la signification qui lui a été donnée ci-dessus à la revendicaiton 1, X représente —CH= ou —N= et M représente un métal de transition bivalent.

2. Procédé selon la revendication 1, caractérisé en ce qu'on utilise des composés de formule I dans lesquels R représente —H, $R_1$ représente —H, —$CH_3$ ou un phényle, M représente un atome de cuivre ou de nickel et A représente un radical répondant à la formule II

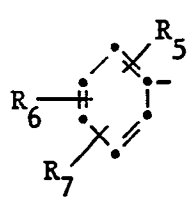

(II)

dans laquelle

$R_5$ représente —H, —Cl, —$CH_3$, —$OCH_3$, —$NO_2$, —CN, —$CF_3$, —COOH, — $CONH_2$, — $SO_2NH_2$, — $CONHR_2$, — $COOR_3$ ou —$NHCOR_4$, $R_6$ représente —H, —Cl, —$CH_3$, —$OCH_3$, —$CONH_2$ ou —$COOR_3$ $R_7$ représente —H ou —Cl, le symbole $R_2$ représentant un alkyle en $C_1$—$C_4$ ou un phényle non substitué ou porteur d'un —Cl, d'un —$CF_3$, d'un —$CH_3$, d'un —$OCH_3$, d'un —$NO_2$, d'un —CN, d'un —$CONH_2$, d'un —$SO_2NH_2$, d'un —CONH—($C_1$—$C_4$-alkyl), d'un —$CONHC_6H_5$, d'un alcoxycarbonyle en $C_2$—$C_5$, d'un N-alkylcarbamoyle en $C_2$—$C_5$, d'un —$NHCOC_5H_5$, d'un $SO_2NHC_6H_5$ ou d'un —$SO_2NH$—($C_1$—$C_4$ alkyl), $R_3$ représentant un alkyle en $C_1$—$C_4$, un benzyle, ou un phényle non substitué ou porteur d'un —Cl, d'un —$CH_3$, d'un —$OCH_3$, d'un alcoxycarbonyle en $C_2$—$C_5$ ou d'un N-alkylcarbamoyle en $C_2$—$C_5$, et $R_4$ représentant un —$CH_3$ ou un phényle non substitué ou porteur d'un —Cl, d'un —$CH_3$, d'un —$OCH_3$, d'un —$NO_2$ ou d'un N-alkylcarbamoyle en $C_2$—$C_5$.

3. Procédé selon la revendication 2, caractérisé en ce que, dans la formule I, R représente —H, $R_1$ représente —H ou —$CH_3$, M représente un atome de nickel et A représente un radical de formule II selon la revendication 2 dans lequel $R_5$ représente —H, —Cl, —$CH_3$, —$OCH_3$, —$NO_2$, —$CF_3$, —COOH, —$COOCH_3$, —$CONH_2$, —$CONHC_6H_5$, —$NHCOCH_3$ ou —$NHCOC_6H_5$, $R_6$ représente —H, —Cl ou —$CH_3$ et $R_7$ représente —H ou —Cl.

4. Composés de formule I selon la revendication 1, caractérisés en ce que, dans la formule I: lorsque R représente —Cl, —$CH_3$ ou —$OCH_3$ et que $R_1$ représente —H, un alkyle en $C_1$—$C_4$ ou un phényle non substitué ou porteur d'un halogène, d'un alkyle en $C_1$—$C_4$, d'un alcoxy en $C_1$—$C_4$, d'un —$NO_2$, d'un —$CONH_2$, d'un —$CONHR_2$ ou d'un N-alkylcarbamoyle en $C_2$—$C_5$, A représente un phényle non substitué ou porteur d'un halogène, d'un phényle, d'un phénylazo, d'un —$CF_3$, d'un —$NO_2$, d'un —CN, d'un —COOH, d'un alkyle en $C_1$—$C_4$, d'un alcoxy en $C_1$—$C_4$, d'un —$CONH_2$, d'un —$SO_2NH_2$, d'un —$CONHR_2$, d'un —$COOR_3$, d'un —$NHCOR_4$ ou d'un —$SO_2NHR_2$, le symbole $R_2$ représentant un alkyle en $C_1$—$C_4$ ou un phényle non substitué ou porteur d'un halogène, d'un —$CF_3$, d'un alkyle en $C_1$—$C_4$, d'un alcoxy en $C_1$—$C_4$, d'un —$NO_2$, d'un —CN, d'un —$CONH_2$, d'un —$SO_2NH_2$, d'un —CONH—($C_1$—$C_4$ alkyl), d'un —$CONHC_6H_5$, d'un alcoxycarbonyle en $C_2$—$C_5$, d'un N-alkylcarbamoyle en $C_2$—$C_5$, d'un —$NHCOC_6H_5$, d'un —$SO_2NH$—($C_1$—$C_4$ alkyl) ou d'un —$SO_2NHC_6H_5$, $R_3$ représentant un alkyle en $C_1$—$C_4$, un benzyle non substitué ou porteur d'un halogène ou d'un alkylke en $C_1$—$C_4$ ou un phényle non substitué ou porteur d'un halogène, d'un alkyle en $C_1$—$C_4$, d'un alcoxy en $C_1$—$C_4$, d'un alcoxycarbonyle en $C_2$—$C_5$ ou d'un N-alkylcarbamoyle en $C_2$—$C_5$, et $R_4$ représentant un alkyle en $C_1$—$C_4$ ou un phényle non substitué ou porteur d'un halogène d'un alkyle en $C_1$—$C_4$, d'un alcoxy en $C_1$—$C_4$, d'un —$NO_2$ ou d'un N-alkylcarbamoyle en $C_2$—$C_5$, ou A représente un radical naphtyle non substitué ou porteur d'un hnalogène ou d'un —$CH_3$, un radical anthraquinonyle non substitué ou porteur d'un halogène ou d'un radical —$NO_2$, —$CH_3$, —$OCH_3$, —$NHCOCH_3$ ou —$NHCOC_6H_5$, ou un radical aromatique hétérocyclique non substitué ou porteur d'un —Cl, d'un —$CH_3$ ou d'un —$OCH_3$, et M représente un métal de transition bivalent, et lorsque R et $R_1$ représentent l'un et l'autre un atome d'hydrogène, M a la signification qui lui a été donnée ci-dessus à la revendication 4 et A représente un radical répondant à la formule III

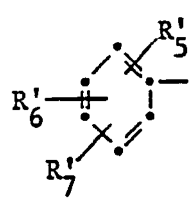

(III)

dans laquelle $R'_5$ représente un radical —CN, —$CONHR_2$, —$COOR_3$ ou —$NHCOR_4$, $R'_6$ représente —H, un halogène, un alkyle en $C_1$—$C_4$, un alcoxy en $C_1$—$C_4$ ou un radical —$CONH_2$, —$CONHR_2$, —$COOR_3$ ou —$NHCOR_4$, les symboles $R_2$, $R_3$ et $R_4$ ayant les significations qui leur ont été données ci-dessus à la revendication 4, et $R'_7$ représente —H ou un halogène, A représente un radical naphtyle non substitué ou porteur d'un halogène ou d'un —$CH_3$, un radical anthraquinonyle non substitué ou porteur d'un halogène ou d'un radical —$NO_2$, —$CH_3$, —$OCH_3$, —$NHCOCH_3$ ou —$NHCOC_6H_5$, ou un radical aromatique hétérocyclique non substitué ou porteur d'un —Cl, d'un —$CH_3$ ou d'un —$OCH_3$.

5. Composés de formule I selon la revendication 4 dans lesquels dans le cas où $R_1$ représente un —$CH_3$ ou un phényle, R représente —H, M représente un atome de cuivre ou de nickel et A représente un radical répondant à la formule II:

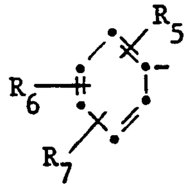

(II)

dans laquelle $R_5$ représente —H, —Cl, $CH_3$, —$OCH_3$, —$NO_2$, —CH, —$CF_3$, —COOH, —$CONH_2$, —$SO_2NH_2$, —$CONHR_2$, —$COOR_3$ ou —$NHCOR_4$, $R_6$ représente —H, —Cl, —$CH_3$, —$OCH_3$, —$CONH_2$ ou —$COOR_3$, et $R_7$

représente —H ou —Cl, le symbole $R_2$ représentant un alkyle en $C_1$ à $C_4$ ou un phényle non substitué ou porteur d'un —Cl, d'un —$CF_3$, d'un —$CH_3$, d'un—$OCH_3$, d'un —$NO_2$, d'un —CN, d'un —$CONH_2$, d'un —$SO_2NH_2$, d'un —CONH—($C_1$—$C_4$ alkyl), d'un —$CONHC_6H_5$, d'un alcoxycarbonyle en $C_2$—$C_5$, d'un N-alkylcarbamoyle en $C_2$—$C_5$, d'un —$NHCOC_6H_5$, d'un —$SO_2NHC_6H_5$ ou d'un —$SO_2NH$—($C_1$—$C_4$ alkyl), le symbole $R_3$ représentant un alkyle en $C_1$—$C_4$, un benzyle ou un phényle non substitué ou porteur d'un —Cl, d'un —$CH_3$, d'un—$OCH_3$, d'un alcoxycarbonyle en $C_2$—$C_5$ ou d'un N-alkylcarbamoyle en $C_2$—$C_5$, et $R_4$ représentant—$CH_3$ ou un phényle non substitué ou porteur d'un —Cl, d'un —$CH_3$, d'un —$OCH_3$, d'un —$NO_2$ ou d'un N-alkylcarbamoyle en $C_2$—$C_5$, et dans le cas où $R_1$ représente un atome d'hydrogène, R et M ont les significations qui leur ont été données ci-dessus à la revendication 5 et A représente un radical répondant à la formule III:

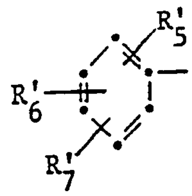

(III)

dans laquelle $R'_5$ représente —CN, —$CONHR_2$, —$COOR_3$ ou —$NHCOR_4$, $R'_6$ représente —H, —Cl, un alkyle en $C_1$—$C_4$, un alcoxy en $C_1$—$C_4$ ou un radical —$CONH_2$, —$CONHR_2$, —$COOR_3$ ou $NHCOR_4$, les symboles $R_2$, $R_3$ et $R_4$ ayant les significations qui leur ont été données à la revendication 5, et $R'_7$ représente —H ou —Cl.

6. Composés de formule I selon la revendicaiton 4, dans lesquels R et $R_1$ représentent chacun un atome d'hydrogène, M représente un atome de nickel et A représente un radical de formule III dans lequel $R'_5$ représente un radical —$CONH_2$, —$CONHCH_3$, —$CONHC_6H_5$ ou —$COOCH_3$, $R'_6$ représente —H, —Cl ou —$CH_3$ et $R'_7$ représente —H ou —Cl.

7. Composés de formule Ia selon la revendication 1, dans lesquels: A représente un radical phényle non substitué ou porteur d'un halogène, d'un phényle, d'un phénylazo, d'un —$CF_3$, d'un —COOH, d'un —$NO_2$, d'un —CN, d'un alkyle en $C_1$—$C_4$, d'un alcoxy en $C_1$—$C_4$, d'un —$CONH_2$, d'un $SO_2NH_2$, d'un —$CONHR_2$, d'un —$COOR_3$, d'un —$NHCOR_4$ ou d'un —$SO_2NHR_2$, le symbole $R_2$ représentant un alkyle en $C_1$—$C_4$ ou un phényle non substitué ou porteur d'un halogène, d'un —$CF_3$, d'un alkyle en $C_1$—$C_4$, d'un alcoxy en $C_1$—$C_4$, d'un —$NO_2$, d'un —CN, d'un —$CONH_2$, d'un —$SO_2NH_2$, d'un —CONH—($C_1$—$C_4$ alkyl), d'un —$CONHC_6H_5$, d'un alcoxycarbonyle en $C_2$—$C_5$, d'un N-alkylcarbamoyle en $C_2$—$C_5$, d'un $NHCOC_6H_5$, d'un —$SO_2NH$—($C_1$—$C_4$ alkyl) ou d'un —$SO_2NHC_6H_5$, $R_3$ représentant un alkyle en $C_1$—$C_4$, un benzyle non substitué ou porteur d'un halogène ou d'un alkyle en $C_1$—$C_4$ ou un phényle non substitué ou porteur d'un halogène, d'un alkyle en $C_1$—$C_4$, d'un alcoxy en $C_1$—$C_4$, d'un alcoxycarbonyle en $C_2$—$C_5$ ou d'un N-alkylcarbamoyle en $C_2$—$C_5$, et $R_4$ représentant un alkyle en $C_1$—$C_4$ ou un phényle non substitué ou porteur d'un halogène, d'un alkyle en $C_1$—$C_4$, d'un alcoxy en $C_1$—$C_4$, d'un —$NO_2$ ou d'un N-alkylcarbamoyle en $C_2$—$C_5$, ou A représente un radical naphtyle non substitué ou porteur d'un halogène ou d'un —$CH_3$, un radical anthraquinonyle non substitué ou porteur d'un halogène, d'un —$NO_2$, d'un —$CH_3$, d'un —$OCH_3$, d'un —$NHCOCH_3$ ou d'un —$NHCOC_6H_5$, ou un radical aromatique hétérocyclique non substitué ou porteur d'un —Cl, d'un —$CH_3$ ou d'un —$OCH_3$, $R_1$ représente —H, un alkyle en $C_1$—$C_4$ ou un phényle non substitué ou porteur d'un halogène, d'un alkyle en $C_1$—$C_4$, d'un alcoxy en $C_1$—$C_4$, d'un —$NO_2$, d'un —$CONH_2$, d'un —$CONHR_2$ ou d'un N-alkylcarbamoyle en $C_2$—$C_5$, X représente —CH= ou —N=, avec la condition que, dans le cas où X représente —CH=, $R_1$ ne représente pas un atome d'hydrogène, et M représente un métal de transition bivalent.

8. Matières colorées dans la masse qui contiennent un composé de formules I et/ou Ia selon la revendication.

**Claims**

1. A process for mass-colouring high-molecular organic material, which comprises using compounds of the formulae I and/or Ia

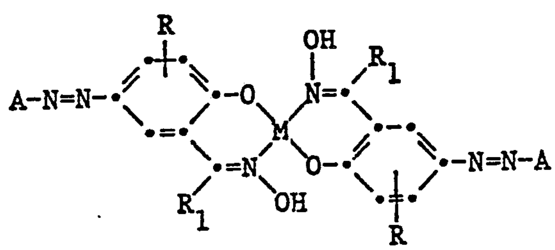

,

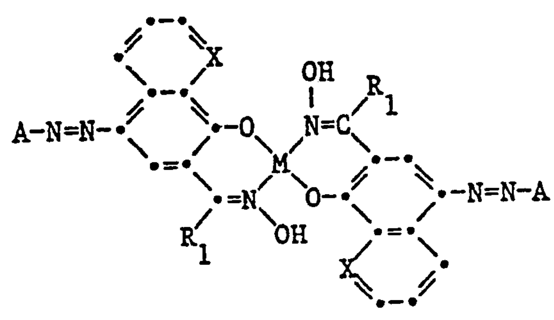

(I)

(Ia)

in which A is a phenyl radical which is unsubstituted or substituted by halogen, phenyl, phenylazo, carboxyl, —$CF_3$, —$NO_2$,—CN, $C_1$—$C_4$alkyl, $C_1$—$C_4$alkoxy, —$CONH_2$, —$SO_2NH_2$, —$CONHR_2$, —$COOR_3$, —$NHCOR_4$ or —$SO_2NHR_2$, where $R_2$ is $C_1$—$C_4$alkyl or phenyl which is unsubstituted or substituted by halogen, —$CF_3$, $C_1$—$C_4$alkyl, $C_1$—$C_4$alkoxy, —$NO_2$, —CN, —$CONH_2$, —$SO_2NH_2$, —$CONHC_1$—$C_4$alkyl, $CONHC_6H_5$, $C_2$—$C_5$alkoxycarbonyl, N—$C_2$—$C_5$alkylcarbamoyl, —$NHCOC_6H_5$, —$SO_2NH$—$C_1$—$C_4$alkyl or —$SO_2NHC_6H_5$, $R_3$ is $C_1$—$C_4$alkyl, benzyl which is unsubstituted or substituted by halogen or $C_1$—$C_4$alkyl, or phenyl which is unsubstituted or substituted by halogen, $C_1$—$C_4$alkyl, $C_1$—$C_4$-alkoxy, $C_2$—$C_5$-alkoxycarbonyl or N—$C_2$—$C_5$alkylcarbamoyl, and $R_4$ is $C_1$—$C_4$-alkyl or phenyl which is unsubstituted or substituted by halogen, $C_1$—$C_4$-alkyl, $C_1$—$C_4$-alkoxy, —$NO_2$ or N—$C_2$—$C_5$alkylcarbamoyl, and A is also a naphthyl radical which is unsubstituted or substituted by halogen or —$CH_3$, an anthraquinonyl radical which is unsubstituted or substituted by halogen, —$NO_2$, —$CH_3$, $OCH_3$, —$NHCOCH_3$ or —$NHCOC_6H_5$, or a heterocyclic aromatic radical which is unsubstituted or substituted by —Cl, $CH_3$ or —$OCH_3$, R is —H, —Cl, —$CH_3$ or —$OCH_3$, $R_1$ is —H, $C_1$—$C_4$alkyl or phenyl which is unsubstituted or substituted by halogen, $C_1$—$C_4$alkyl, $C_1$—$C_4$alkoxy, —$NO_2$, —$CONH_2$, —$CONHR_2$ or N—$C_2$—$C_5$alkylcarbamoyl, X is —CH= or —N=, and M is a divalent transition metal, $R_2$ being as defined above in claim 1.

2. A process according to claim 1, wherein use is made of compounds of the formula I in which R is —H, $R_1$ is —H, —$CH_3$ or phenyl, M is a copper or nickel atom and A is the radical of the formula II

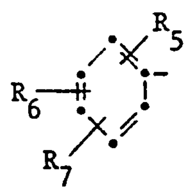

(II)

in which $R_5$ is—H, —Cl, —$CH_3$, —$OCH_3$, —$NO_2$, —CN, —$CF_3$ —COOH, —$CONH_2$, —$SO_2NH_2$, —$CONHR_2$, —$COOR_3$ or—$NHCOR_4$, $R_6$ is—H, —Cl, —$CH_3$, —$OCH_3$, —$CONH_2$ or —$COOR_3$, and $R_7$ is —H or —Cl, $R_2$ being $C_1$—$C_4$alkyl or phenyl which is unsubstituted or substituted by —Cl, —$CF_3$, —$CH_3$, —$OCH_3$, —$NO_2$, —CN, —$CONH_2$, —$SO_2NH_2$, —$CONHC_1$—$C_4$alkyl, —$CONHC_6H_5$, $C_2$—$C_5$alkoxycarbonyl, N—$C_2$—$C_5$alkylcarbamoyl, —$NHCOC_6H_5$, —$SO_2NHC_6H_5$ or —$SO_2NHC_1$—$C_4$alkyl, $R_3$ being $C_1$—$C_4$alkyl, benzyl or phenyl which is unsubstituted or substituted by —Cl, —$CH_3$, —$OCH_3$, $C_2$—$C_5$alkoxycarbonyl or N—$C_2$—$C_5$alkylcarbamoyl and $R_4$ being —$CH_3$ or phenyl which is unsubstituted or substituted by —Cl, —$CH_3$, —$OCH_3$, —$NO_2$ or N—$C_2$—$C_5$alkylcarbamoyl.

3. A process according to claim 2, wherein in the formula I R is —H, $R_1$ is —H or —$CH_3$, M is a nickel atom and A is the group of the formula II according to claim 2 in which $R_5$ is —H, —Cl, —$CH_3$, —$OCH_3$, —$NO_2$, —$CF_3$, —COOH, —$COOCH_3$, —$CONH_2$, —$CONHC_6H_5$, —$NHCOCH_3$ or —$NHCOC_6H_5$, $R_6$ is —H, —Cl or —$CH_3$ and $R_7$ is —H or —Cl.

4. A compound of the formula I according to claim 1 wherein, in the formula I, when R is —Cl, —$CH_3$ or —$OCH_3$ and $R_1$ is —H, $C_1$—$C_4$alkyl or phenyl which is unsubstituted or substituted by halogen, $C_1$—$C_4$alkyl, $C_1$—$C_4$alkoxy, —$NO_2$, —$CONH_2$, —$CONHR_2$ or N—$C_2$—$C_5$alkylcarbamoyl, A is a phenyl radical which is unsubstituted or substituted by halogen, phenyl, phenylazo, —$CF_3$, —$NO_2$, CN, —COOH, $C_1$—$C_4$alkyl, $C_1$—$C_4$alkoxy, —$CONH_2$, —$SO_2NH_2$, —$CONHR_2$, —$COOR_3$, —$NHCOR_4$ or —$SO_2NHR_2$, $R_2$ being $C_1$—$C_4$-alkyl or phenyl which is unsubstituted or substituted by halogen, —$CF_3$, $C_1$—$C_4$alkyl, $C_1$—$C_4$alkoxy, —$NO_2$, —CN, —$CONH_2$, $SO_2NH_2$, —$CONHC_1$—$C_4$alkyl, —$CONHC_6H_5$, $C_2$—$C_5$alkoxycarbonyl, N—$C_2$—$C_5$alkylcarbamoyl, —$NHCOC_6H_5$, —$SO_2NHC_1$—$C_4$alkyl or —$SO_2NHC_6H_5$, $R_3$ being $C_1$—$C_4$alkyl, benzyl which is unsubstituted or substituted by halogen or $C_1$—$C_4$alkyl or phenyl which is unsubstituted or substituted by halogen, $C_1$—$C_4$alkyl, $C_1$—$C_4$alkoxy, $C_2$—$C_5$alkoxycarbonyl or N—$C_2$—$C_5$alkylcarbamoyl and $R_4$ being $C_1$—$C_4$alkyl or phenyl which is unsubstituted or substituted by halogen, $C_1$—$C_4$alkyl, $C_1$—$C_4$alkoxy, —$NO_2$ or N—$C_2$—$C_5$alkylcarbamoyl, and A is also a naphthyl radical which is unsubstituted or substituted by halogen or —$CH_3$, an anthraquinonyl radical which is unsubstituted or substituted by halogen, —$NO_2$, —$CH_3$, —$OCH_3$, —$NHCOCH_3$ or —$NHCOC_6H_5$, or a heterocyclic aromatic radical which is unsubstituted or substituted by —Cl, —$CH_3$ or —$OCH_3$, and M is a divalent transition metal, and, if R and $R_1$ are both hydrogen atoms, M is as defined above in claim 4 and A is the group of the formula III

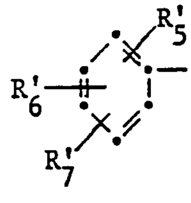

(III)

in which $R_5$ is —CN, —$CONHR_2$, —$COOR_3$ or —$NHCOR_4$, $R_6$ is —H, halogen, $C_1$—$C_4$alkyl, $C_1$—$C_4$alkoxy, —$CONH_2$, —$CONHR_2$, —$COOR_3$ or —$NHCOR_4$, $R_2$, $R_3$ and $R_4$ being as defined above in claim 4, and $R_7$ is —H or halogen, or A is also a naphthyl radical which is unsubstituted or substituted by halogen or —$CH_3$, an

anthraquinonyl radical which is unsubstituted or substituted by halogen, $-NO_2$, $-CH_3$, $-OCH_3$, $-NHCOCH_3$ or $-NHCOC_6H_5$, or a heterocyclic aromatic radical which is unsubstituted or substituted by $-Cl$, $-CH_3$ or $-OCH_3$.

5. A compound of the formula I according to claim 4 in which, when $R_1$ is $-CH_3$ or phenyl, R is $-H$, M is a copper or nickel atom, and A is the radical of the formula II

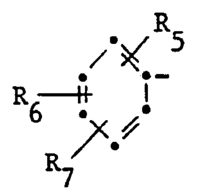 (II)

where $R_5$ is $-H$, $-Cl$, $-CH_3$, $-OCH_3$, $-NO_2$, $-CN$, $-CF_3$, $-COOH$, $-CONH_2$, $-SO_2NH_2$, $-CONHR_2$, $-COOR_3$ or $-NHCOR_4$, $R_6$ is $-H$, $-Cl$, $-CH_3$, $-OCH_3$, $-CONH_2$ or $-COOR_3$ and $R_7$ is $-H$ or $-Cl$, $R_2$ being $C_1$—$C_4$alkyl or phenyl which is unsubstituted or substituted by $-Cl$, $CF_3$, $-CH_3$, $-OCH_3$, $-NO_2$, $-CN$, $-CONH_2$, $-SO_2NH_2$, $-CONHC_1$—$C_4$alkyl, $CONHC_6H_5$, $C_2$—$C_5$alkoxycarbonyl, $C_2$—$C_5$alkylcarbamoyl, $-NHCOC_6H_5$, $-SO_2NHC_6H_5$ or $-SO_2NHC_1$—$C_4$alkyl, $R_3$ being $C_1$—$C_4$alkyl, benzyl or phenyl which is unsubstituted or substituted by $-Cl$, $-CH_3$, $-OCH_3$, $-C_2$—$C_5$alkoxycarbonyl or N—$C_2$—$C_5$alkylcarbamoyl, and $R_4$ being $-CH_3$ or phenyl which is unsubstituted or substituted by $-Cl$, $-CH_3$, $-OCH_3$, $-NO_2$ or N—$C_2$—$C_5$alkylcarbamoyl, and when $R_1$ is a hydrogen atom, R and M are as defined above in claim 5 and A is the radical of the formula III

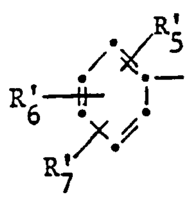 (III)

in which $R_5$ is $-CN$, $-CONHR_2$, $-COOR_3$ or $-NHCOR_4$, $R_6$ is $-H$, $-Cl$, $C_1$—$C_4$alkyl, $C_1$—$C_4$alkoxy, $-CONH_2$, $CONHR_2$, $-COOR_3$ or $-NHCOR_4$, $R_2$, $R_3$ and $R_4$ being as defined above in claim 5, and $R_7$ is $-H$ or $-Cl$.

6. A compound of the formula I according to claim 4, in which R and $R_1$ are a hydrogen atom, M is a nickel atom and A is the group of the formula III in which $R_5$ is $-CONH_2$, $-CONHCH_3$, $-CONHC_6H_5$ or $-COOCH_3$, $R_6$ is $-H$, $-Cl$ or $-CH_3$ and $R_7$ is $-H$ or $-Cl$.

7. A compound of the formula Ia according to claim 1, in which a phenyl radical which is unsubstituted or substituted by halogen, phenyl, phenylazo, $-CF_3$, $-COOH$, $-NO_2$, $-CN$, $C_1$—$C_4$alkyl, $C_1$—$C_4$alkoxy, $-CONH_2$, $-SO_2NH_2$, $-CONHR_2$, $-COOR_3$, $-NHCOR_4$ or $-SO_2NHR_2$, $R_2$ being $C_1$—$C_4$alkyl or phenyl which is unsubstituted or substituted by halogen, $-CF_3$, $C_1$—$C_4$-alkyl, $C_1$—$C_4$alkoxy, $-NO_2$, $-CN$, $-CONH_2$, $-SO_2NH_2$, $-CONHC_1$—$C_4$alkyl, $CONHC_6H_5$, $C_2$—$C_5$alkoxycarbonyl, N—$C_2$—$C_5$alkylcarbamoyl, $-NHCOC_6H_5$, $-SO_2NHC_1$— $C_4$alkyl or $-SO_2NHC_6H_5$, $R_3$ being $C_1$—$C_4$ alkyl, benzyl which is unsubstituted or substituted by halogen or $C_1$—$C_4$alkyl or phenyl which is unsubstituted or substituted by halogen, $C_1$—$C_4$alkyl, $C_1$—$C_4$alkoxy, $C_2$—$C_5$alkoxycarbonyl or N—$C_2$-$C_5$alkylcarbamoyl and $R_4$ being $C_1$—$C_4$alkyl or phenyl which is unsubstituted or substituted by halogen, $C_1$—$C_4$alkyl, $C_1$—$C_4$alkoxy, $-NO_2$ or N—$C_2$—$C_5$alkylcarbamoyl, and A is also a naphthyl radical which is unsubstituted or substituted by halogen or $-CH_3$, an anthraquinonyl radical which is unsubstituted or substituted by halogen, $-NO_2$, $-CH_3$, $-OCH_3$, $-NHCOCH_3$ or $-NHCOC_6H_5$, or a heterocyclic aromatic radical which is unsubstituted or substituted by $-Cl$, $-CH_3$ or $-OCH_3$, $R_1$ is $-H$, $C_1$—$C_4$alkyl or phenyl which is unsubstituted or substituted by halogen, $C_1$—$C_4$alkyl, $C_1$—$C_4$alkoxy, $-NO_2$, $-CONH_2$, $-CONHR_2$ or N—$C_2$—$C_5$-alkylcarbamoyl, X is $-CH=$ or $-N=$, where, when X is $-CH=$, $R_1$ must not be a hydrogen atom, and M is a divalent transition metal.

8. Mass-coloured material containing a compound of the formulae I and/or Ia according to claim 1.